(19) Europäisches Patentamt / European Patent Office / Office européen des brevets

(11) **EP 4 226 269 B1**

(12) **EUROPEAN PATENT SPECIFICATION**

(45) Date of publication and mention
of the grant of the patent:
**28.01.2026 Bulletin 2026/05**

(21) Application number: **21878599.6**

(22) Date of filing: **08.10.2021**

(51) International Patent Classification (IPC):
*G06F 30/27* (2020.01)    *G06F 30/17* (2020.01)
*G06T 15/08* (2011.01)    *G06T 15/10* (2011.01)
*G06T 19/00* (2011.01)    *G06F 111/20* (2020.01)
*G06F 111/04* (2020.01)    *G06F 111/06* (2020.01)
*G06N 3/044* (2023.01)    *G06N 3/045* (2023.01)
*G06N 3/084* (2023.01)    *G06F 30/00* (2020.01)
*G06F 30/10* (2020.01)    *G06F 113/12* (2020.01)

(52) Cooperative Patent Classification (CPC):
**G06N 3/084; G06F 30/00; G06F 30/10;
G06F 30/17; G06F 30/27; G06N 3/044;
G06N 3/045; G06N 3/0464; G06N 3/0475;
G06N 3/09; G06N 3/092; G06N 3/094;**
G06F 2113/12

(86) International application number:
**PCT/US2021/054136**

(87) International publication number:
**WO 2022/076797 (14.04.2022 Gazette 2022/15)**

(54) **COMPUTER ARCHITECTURE FOR GENERATING FOOTWEAR DIGITAL ASSET**

COMPUTERARCHITEKTUR ZUR ERZEUGUNG VON DIGITALEN FUSSBEKLEIDUNGSASSETS

ARCHITECTURE D'ORDINATEUR PERMETTANT DE GÉNÉRER UN ACTIF NUMÉRIQUE DE CHAUSSURE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.10.2020 US 202063089435 P**

(43) Date of publication of application:
**16.08.2023 Bulletin 2023/33**

(73) Proprietor: **Nike Innovate C.V.
Beaverton, OR 97005-6453 (US)**

(72) Inventors:
• **TE, Ron
Beaverton, Oregon 97005-6453 (US)**
• **REDMOND, Eric
Beaverton, Oregon 97005-6453 (US)**
• **UDIT, Shashwat
Beaverton, Oregon 97005-6453 (US)**
• **GREALY, Andrew
Beaverton, Oregon 97005-6453 (US)**
• **PRICHARD, Michael
Beaverton, Oregon 97005-6453 (US)**
• **PRYOR, Michael
Beaverton, Oregon 97005-6453 (US)**
• **CREEDEN, Colin
Beaverton, Oregon 97005-6453 (US)**
• **IGNAZIO, Roger
Beaverton, Oregon 97005-6453 (US)**

(74) Representative: **Haseltine Lake Kempner LLP
One Portwall Square
Portwall Lane
Bristol BS1 6BH (GB)**

(56) References cited:
**EP-A1- 1 003 131**    **WO-A1-2014/107520**
**US-A1- 2013 018 498**    **US-A1- 2016 110 479**
**US-A1- 2020 164 582**    **US-A1- 2020 210 845**

**(Cont. next page)**

- ROBERTO RAFFAELI ET AL: "Advanced computer aided technologies for design automation in footwear industry", INTERNATIONAL JOURNAL ON INTERACTIVE DESIGN AND MANUFACTURING (IJIDEM), SPRINGER-VERLAG, PARIS, vol. 5, no. 3, 17 May 2011 (2011-05-17), pages 137 - 149, XP019947323, ISSN: 1955-2505, DOI: 10.1007/S12008-011-0122-Z
- WU CHAO ET AL: "Automatic 3D Modelling for Heel Based on the Images of 2D Sketches", 2020 3RD INTERNATIONAL CONFERENCE ON ADVANCED ELECTRONIC MATERIALS, COMPUTERS AND SOFTWARE ENGINEERING (AEMCSE), IEEE, 24 April 2020 (2020-04-24), pages 150 - 153, XP033787395, DOI: 10.1109/AEMCSE50948.2020.00038
- DMITRIY SMIRNOV ET AL: "Learning Manifold Patch-Based Representations of Man-Made Shapes", ARXIV.ORG, CORNELL UNIVERSITY LIBRARY, 201 OLIN LIBRARY CORNELL UNIVERSITY ITHACA, NY 14853, 31 May 2020 (2020-05-31), XP081663821
- DMITRIY SMIRNOV ET AL: "Deep Sketch-Based Modeling of Man-Made Shapes", ARXIV.ORG, CORNELL UNIVERSITY LIBRARY, 201 OLIN LIBRARY CORNELL UNIVERSITY ITHACA, NY 14853, 28 June 2019 (2019-06-28), XP081385692
- KHAN U ET AL: "Freeform surface inference from sketches via neural networks", ARXIV,, vol. 71, no. 16-18, 1 October 2008 (2008-10-01), pages 3282 - 3294, XP025407849, DOI: 10.1016/J.NEUCOM.2008.04.046

**Description**

PRIORITY APPLICATIONS

This application claims the benefit of priority to U.S. Provisional Patent Application Serial No. 63/089,435, filed October 8, 2020.

TECHNICAL FIELD

Embodiments pertain to computer architecture. Some embodiments relate to machine learning. Some embodiments relate to using machine learning for generating a digital asset representing footwear.

BACKGROUND

Footwear designs are often complex. A footwear item may include multiple different components, with each component having a different shape and position. Digital representations of footwear may be desirable. Document XP019947323, Roberto Raffaeli et. al., "Advanced computer aided technologies for design automation in footwear industry" represents relevant prior art.

BRIEF DESCRIPTION OF THE DRAWINGS

FIG. 1 illustrates the training and use of a machine-learning program, in accordance with some embodiments.
FIG. 2 illustrates an example neural network, in accordance with some embodiments.
FIG. 3 illustrates the training of an image recognition machine learning program, in accordance with some embodiments.
FIG. 4 illustrates the feature-extraction process and classifier training, in accordance with some embodiments.
FIG. 5 is a block diagram of a computing machine, in accordance with some embodiments.
FIG. 6 is a data flow pipeline for generating a digital asset representing footwear, in accordance with some embodiments.
FIG. 7 is a data flow pipeline representing preprocessing, in accordance with some embodiments.
FIG. 8 is a data flow pipeline representing part identification, in accordance with some embodiments.
FIG. 9 illustrates bounding boxes identifying the components of a midsole of footwear, in accordance with some embodiments.
FIG. 10 illustrates bounding boxes identifying the components of a logo of footwear, in accordance with some embodiments.
FIG. 11 illustrates examples of footwear components marked with guide points, in accordance with some embodiments.

FIG. 12 is a data flow pipeline representing building of 3D assets, in accordance with some embodiments.
FIG. 13 illustrates example 3D model details of footwear, in accordance with some embodiments.
FIG. 14 is a flow chart of an example method for generating a digital asset representing footwear, in accordance with some embodiments.

DETAILED DESCRIPTION

The invention is defined by the claims.
The following description and the drawings sufficiently illustrate specific embodiments to enable those skilled in the art to practice them. Other embodiments may incorporate structural, logical, electrical, process, and other changes. Portions and features of some embodiments may be included in, or substituted for, those of other embodiments. Embodiments set forth in the claims encompass all available equivalents of those claims.
As discussed above, apparel, for example, footwear, designs are often complex. An apparel item may include multiple different components, with each component having a different shape and position. This may make generating a three-dimensional (3D) computer-aided design (CAD) digital model of hand-designed two-dimensional (2D) or 3D apparel models a complex process. Such a digital model may be used, for example, in generating instructions for manufacturing the footwear a complex process. As the foregoing illustrates, digital representations of apparel may be desirable.
Some embodiments relate to generating (e.g., from imagery, models or other visual data) apparel CAD files for manufacturing the apparel. According to some embodiments, computing machine(s) access an input image of apparel, for example, footwear. The input image is a pixel or voxel based image. The computing machine(s) generate, based on the input image and using one or more machine learning engines implemented at the computing machine(s), a 3D CAD digital asset comprising a non-uniform rational basis spline (NURBS) model of the apparel. Generating the 3D CAD digital asset includes identifying, using a trained classification engine, a visual component of the apparel. Generating the 3D CAD digital asset also includes iteratively fitting, for the visual component of the apparel, a spline using a trained reinforcement learning engine until the spline is within a predefined average distance from the visual component. The 3D CAD digital asset includes the spline(s). The machine learning engines include the trained classification engine and the trained reinforcement learning engine. The computing machine(s) provide an output representing the 3D CAD digital asset.
As used herein, a non-uniform rational basis spline (NURBS) models may include mathematical representations of 2D or 3D objects, which can be standard shapes (such as a cone) or free-form shapes (such as a car).

A spline may include a curvy pattern used to guide someone shaping something large, such as a boat hull. The B-spline is based (the B stands for basis) on four (or another number of) local functions or control points that lie outside the curve itself. Nonuniform may represent the idea that some sections of a defined shape (between any two points) can be shortened or elongated relative to other sections in the overall shape. Rational may describe the ability to give more weight to some points in the shape than to other points in considering each positions relation to another object. (This may be referred to as a fourth dimensional characteristic.)

A spline may be defined using control points and a mathematical function based on the control points. A graphical representation of the spline may be mathematically computed based on the control points. The control points determine the shape of a curve corresponding to the mathematical function.

Aspects of the present invention may be implemented as part of a computer system. The computer system may be one physical machine, or may be distributed among multiple physical machines, such as by role or function, or by process thread in the case of a cloud computing distributed model. In various embodiments, aspects of the invention may be configured to run in virtual machines that in turn are executed on one or more physical machines. It will be understood by persons of skill in the art that features of the invention may be realized by a variety of different suitable machine implementations.

The system includes various engines, each of which is constructed, programmed, configured, or otherwise adapted, to carry out a function or set of functions. The term engine as used herein means a tangible device, component, or arrangement of components implemented using hardware, such as by an application specific integrated circuit (ASIC) or field-programmable gate array (FPGA), for example, or as a combination of hardware and software, such as by a processor-based computing platform and a set of program instructions that transform the computing platform into a special-purpose device to implement the particular functionality. An engine may also be implemented as a combination of the two, with certain functions facilitated by hardware alone, and other functions facilitated by a combination of hardware and software.

In an example, the software may reside in executable or non-executable form on a tangible machine-readable storage medium. Software residing in non-executable form may be compiled, translated, or otherwise converted to an executable form prior to, or during, runtime. In an example, the software, when executed by the underlying hardware of the engine, causes the hardware to perform the specified operations. Accordingly, an engine is physically constructed, or specifically configured (e.g., hardwired), or temporarily configured (e.g., programmed) to operate in a specified manner or to perform part or all of any operations described herein in connection with that engine.

Considering examples in which engines are temporarily configured, each of the engines may be instantiated at different moments in time. For example, where the engines comprise a general-purpose hardware processor core configured using software; the general-purpose hardware processor core may be configured as respective different engines at different times. Software may accordingly configure a hardware processor core, for example, to constitute a particular engine at one instance of time and to constitute a different engine at a different instance of time.

In certain implementations, at least a portion, and in some cases, all, of an engine may be executed on the processor(s) of one or more computers that execute an operating system, system programs, and application programs, while also implementing the engine using multitasking, multithreading, distributed (e.g., cluster, peer-peer, cloud, etc.) processing where appropriate, or other such techniques. Accordingly, each engine may be realized in a variety of suitable configurations, and should generally not be limited to any particular implementation exemplified herein, unless such limitations are expressly called out.

In addition, an engine may itself be composed of more than one sub-engines, each of which may be regarded as an engine in its own right. Moreover, in the embodiments described herein, each of the various engines corresponds to a defined functionality; however, it should be understood that in other contemplated embodiments, each functionality may be distributed to more than one engine. Likewise, in other contemplated embodiments, multiple defined functionalities may be implemented by a single engine that performs those multiple functions, possibly alongside other functions, or distributed differently among a set of engines than specifically illustrated in the examples herein.

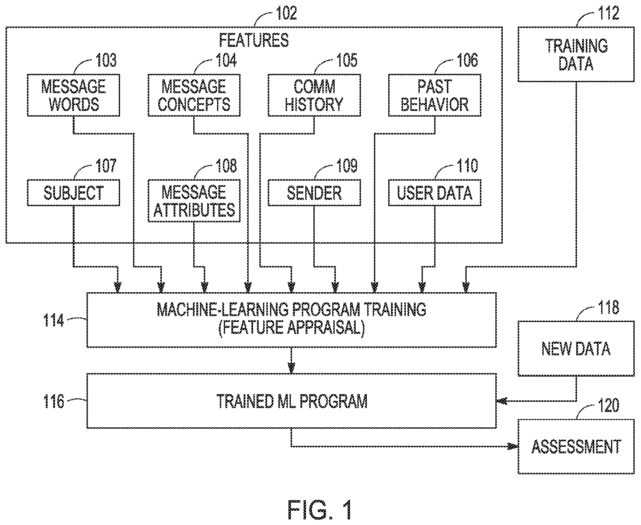

FIG. 1 illustrates the training and use of a machine-learning program, according to some example embodiments. In some example embodiments, machine-learning programs (MLPs), also referred to as machine-learning algorithms or tools, are utilized to perform operations associated with machine learning tasks, such as image recognition or machine translation.

Machine learning is a field of study that gives computers the ability to learn without being explicitly programmed. Machine learning explores the study and construction of algorithms, also referred to herein as tools, which may learn from existing data and make predictions about new data. Such machine-learning tools operate by building a model from example training data 112 in order to make data-driven predictions or decisions expressed as outputs or assessments 120. Although example embodiments are presented with respect to a few machine-learning tools, the principles presented herein may be applied to other machine-learning tools.

In some example embodiments, different machine-learning tools may be used. For example, Logistic Regression (LR), Naive-Bayes, Random Forest (RF), neural networks (NN), matrix factorization, and Support Vector Machines (SVM) tools may be used for classifying or scoring job postings.

Two common types of problems in machine learning are classification problems and regression problems. Classification problems, also referred to as categorization problems, aim at classifying items into one of several category values (for example, is this object an apple or an orange). Regression algorithms aim at quantifying some items (for example, by providing a value that is a real number). The machine-learning algorithms utilize the training data 112 to find correlations among identified features 102 that affect the outcome.

The machine-learning algorithms utilize features 102 for analyzing the data to generate assessments 120. A feature 102 is an individual measurable property of a phenomenon being observed. The concept of a feature is related to that of an explanatory variable used in statistical techniques such as linear regression. Choosing informative, discriminating, and independent features is important for effective operation of the MLP in pattern recognition, classification, and regression. Features may be of different types, such as numeric features, strings, and graphs.

In one example embodiment, the features 102 may be of different types and may include one or more of words of the message 103, message concepts 104, communication history 105, past user behavior 106, subject of the message 107, other message attributes 108, sender 109, and user data 110.

The machine-learning algorithms utilize the training data 112 to find correlations among the identified features 102 that affect the outcome or assessment 120. In some example embodiments, the training data 112 includes labeled data, which is known data for one or more identified features 102 and one or more outcomes, such as detecting communication patterns, detecting the meaning of the message, generating a summary of the message, detecting action items in the message, detecting urgency in the message, detecting a relationship of the user to the sender, calculating score attributes, calculating message scores, etc.

With the training data 112 and the identified features 102, the machine-learning tool is trained at operation 114. The machine-learning tool appraises the value of the features 102 as they correlate to the training data 112. The result of the training is the trained machine-learning program 116.

When the machine-learning program 116 is used to perform an assessment, new data 118 is provided as an input to the trained machine-learning program 116, and the machine-learning program 116 generates the assessment 120 as output. For example, when a message is checked for an action item, the machine-learning program utilizes the message content and message metadata to determine if there is a request for an action in the message.

Machine learning techniques train models to accurately make predictions on data fed into the models (e.g., what was said by a user in a given utterance, whether a noun is a person, place, or thing; what the weather will be like tomorrow). During a learning phase, the models are developed against a training dataset of inputs to optimize the models to correctly predict the output for a given input. Generally, the learning phase may be supervised, semi-supervised, or unsupervised; indicating a decreasing level to which the "correct" outputs are provided in correspondence to the training inputs. In a supervised learning phase, all of the outputs are provided to the model and the model is directed to develop a general rule or algorithm that maps the input to the output. In contrast, in an unsupervised learning phase, the desired output is not provided for the inputs so that the model may develop its own rules to discover relationships within the training dataset. In a semi-supervised learning phase, an incompletely labeled training set is provided, with some of the outputs known and some unknown for the training dataset.

Models may be run against a training dataset for several epochs (e.g., iterations), in which the training dataset is repeatedly fed into the model to refine its results. For example, in a supervised learning phase, a model is developed to predict the output for a given set of inputs, and is evaluated over several epochs to more reliably provide the output that is specified as corresponding to the given input for the greatest number of inputs for the training dataset. In another example, for an unsupervised learning phase, a model is developed to cluster the dataset into $n$ groups, and is evaluated over several epochs as to how consistently it places a given input into a given group and how reliably it produces the n desired clusters across each epoch.

Once an epoch is run, the models are evaluated and the values of their variables are adjusted to attempt to better refine the model in an iterative fashion. In various aspects, the evaluations are biased against false negatives, biased against false positives, or evenly biased with respect to the overall accuracy of the model. The values may be adjusted in several ways depending on the machine learning technique used. For example, in a genetic or evolutionary algorithm, the values for the models that are most successful in predicting the desired outputs are used to develop values for models to use during the subsequent epoch, which may include random variation/mutation to provide additional data points. One of ordinary skill in the art will be familiar with several other machine learning algorithms that may be applied with the present disclosure, including linear regression, random forests, decision tree learning, neural networks, deep neural networks, etc.

Each model develops a rule or algorithm over several epochs by varying the values of one or more variables affecting the inputs to more closely map to a desired result, but as the training dataset may be varied, and is preferably very large, perfect accuracy and precision may not be achievable. A number of epochs that make up a learning phase, therefore, may be set as a given number of trials or a fixed time/computing budget, or may be terminated before that number/budget is reached when the accuracy of a given model is high enough or low enough or an accuracy plateau has been reached. For example, if the training phase is designed to run n epochs and produce a model with at least 95% accuracy, and such a model is produced before the $n^{th}$ epoch, the learning phase may end early and use the produced model satisfying the end-goal accuracy threshold. Similarly, if a given model is inaccurate enough to satisfy a random chance threshold (e.g., the model is only 55% accurate in determining true/false outputs for given inputs), the learning phase for that model may be terminated early, although other models in the learning phase may continue training. Similarly, when a given model continues to provide similar accuracy or vacillate in its results across multiple epochs - having reached a performance plateau - the learning phase for the given model may terminate before the epoch number/computing budget is reached.

Once the learning phase is complete, the models are finalized. In some example embodiments, models that are finalized are evaluated against testing criteria. In a first example, a testing dataset that includes known outputs for its inputs is fed into the finalized models to determine an accuracy of the model in handling data that is has not been trained on. In a second example, a false positive rate or false negative rate may be used to evaluate the models after finalization. In a third example, a delineation between data clusterings is used to select a model that produces the clearest bounds for its clusters of data.

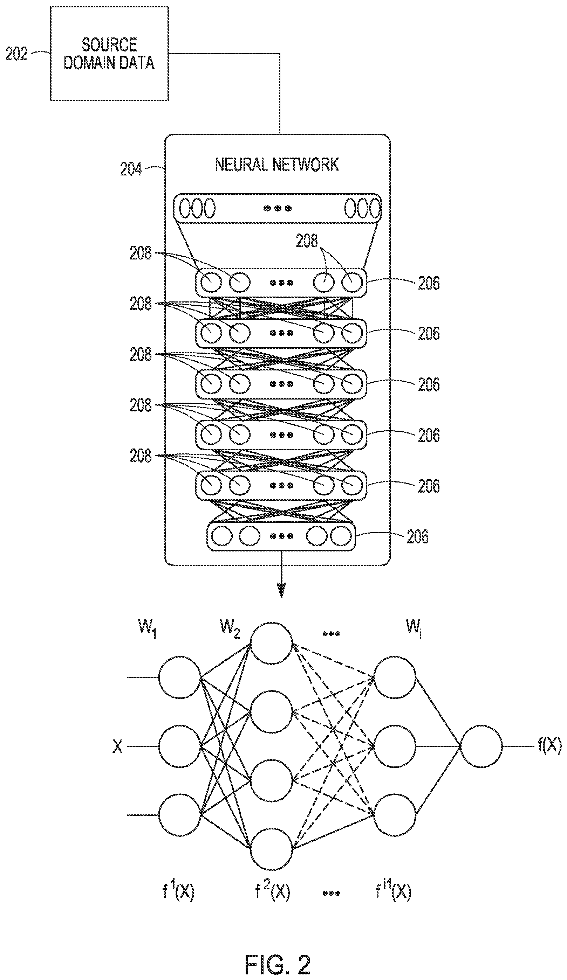

FIG. 2 illustrates an example neural network 204, in accordance with some embodiments. As shown, the artificial neural network 204 receives, as input, source domain data 202. The input is passed through a plurality of layers 206 to arrive at an output. Each layer 206 includes multiple neurons 208. The neurons 208 receive input from neurons of a previous layer and apply weights to the values received from those neurons in order to generate a neuron output. The neuron outputs from the final layer 206 are combined to generate the output of the artificial neural network 204.

As illustrated at the bottom of FIG. 2, the input is a vector x. The input is passed through multiple layers 206, where weights $W_1, W_2,...,W_i$ are applied to the input to each layer to arrive at $f^1(x), f^2(x),...,f^{i-1}(x)$, until finally the output $f(x)$ is computed.

In some example embodiments, the artificial neural network 204 (e.g., deep learning, deep convolutional, or recurrent neural network) comprises a series of neurons 208, such as Long Short Term Memory (LSTM) nodes, arranged into a network. A neuron 208 is an architectural element used in data processing and artificial intelligence, particularly machine learning, which includes memory that may determine when to "remember" and when to "forget" values held in that memory based on the weights of inputs provided to the given neuron 208. Each of the neurons 208 used herein are configured to accept a predefined number of inputs from other neurons 208 in the artificial neural network 204 to provide relational and sub-relational outputs for the content of the frames being analyzed. Individual neurons 208 may be chained together and/or organized into tree structures in various configurations of neural networks to provide interactions and relationship learning modeling for how each of the frames in an utterance are related to one another.

For example, an LSTM node serving as a neuron includes several gates to handle input vectors (e.g., phonemes from an utterance), a memory cell, and an output vector (e.g., contextual representation). The input gate and output gate control the information flowing into and out of the memory cell, respectively, whereas forget gates optionally remove information from the memory cell based on the inputs from linked cells earlier in the artificial neural network. Weights and bias vectors for the various gates are adjusted over the course of a training phase, and once the training phase is complete, those weights and biases are finalized for normal operation. One of skill in the art will appreciate that neurons and neural networks may be constructed programmatically (e.g., via software instructions) or via specialized hardware linking each neuron to form the artificial neural network.

Neural networks utilize features for analyzing the data to generate assessments (e.g., recognize units of speech). A feature is an individual measurable property of a phenomenon being observed. The concept of feature is related to that of an explanatory variable used in statistical techniques such as linear regression. Further, deep features represent the output of nodes in hidden layers of the deep neural network.

A neural network, sometimes referred to as an artificial neural network, is a computing system/apparatus based on consideration of biological neural networks of animal brains. Such systems/apparatus progressively improve performance, which is referred to as learning, to perform tasks, typically without task-specific programming. For example, in image recognition, an artificial neural network may be taught to identify images that contain an object by analyzing example images that have been tagged with a name for the object and, having learnt the object and name, may use the analytic results to identify the object in untagged images. An artificial neural network is based on a collection of connected units called neurons, where each connection, called a synapse, between neurons can transmit a unidirectional signal with an activating strength that varies with the strength of the connection. The receiving neuron can activate and propagate a signal to downstream neurons connected to it, typically based on whether the combined incoming signals, which are from potentially many transmitting neurons, are of sufficient strength, where strength is a parameter.

A deep neural network (DNN) is a stacked neural network, which is composed of multiple layers. The layers are composed of nodes, which are locations where computation occurs, loosely patterned on a neuron in the human brain, which fires when it encounters sufficient stimuli. A node combines input from the data with a set of coefficients, or weights, that either amplify or dampen that input, which assigns significance to inputs for the task the algorithm is trying to learn. These input-weight products are summed, and the sum is passed through what is called a node's activation function, to determine whether and to what extent that signal progresses further through the network to affect the ultimate outcome. A DNN uses a cascade of many layers of non-linear processing units for feature extraction and transformation. Each successive layer uses the output from the previous layer as input. Higher-level features are derived from lower-level features to form a hierarchical representation. The layers following the input layer may be convolution layers that produce feature maps that are filtering results of the inputs and are used by the next convolution layer.

In training of a DNN architecture, a regression, which is structured as a set of statistical processes for estimating the relationships among variables, can include a minimization of a cost function. The cost function may be implemented as a function to return a number representing how well the artificial neural network performed in mapping training examples to correct output. In training, if the cost function value is not within a predetermined range, based on the known training images, backpropagation is used, where backpropagation is a common method of training artificial neural networks that are used with an optimization method such as a stochastic gradient descent (SGD) method.

Use of backpropagation can include propagation and weight update. When an input is presented to the artificial neural network, it is propagated forward through the artificial neural network, layer by layer, until it reaches the output layer. The output of the artificial neural network is then compared to the desired output, using the cost function, and an error value is calculated for each of the nodes in the output layer. The error values are propagated backwards, starting from the output, until each node has an associated error value which roughly represents its contribution to the original output. Backpropagation can use these error values to calculate the gradient of the cost function with respect to the weights in the artificial neural network. The calculated gradient is fed to the selected optimization method to update the weights to attempt to minimize the cost function.

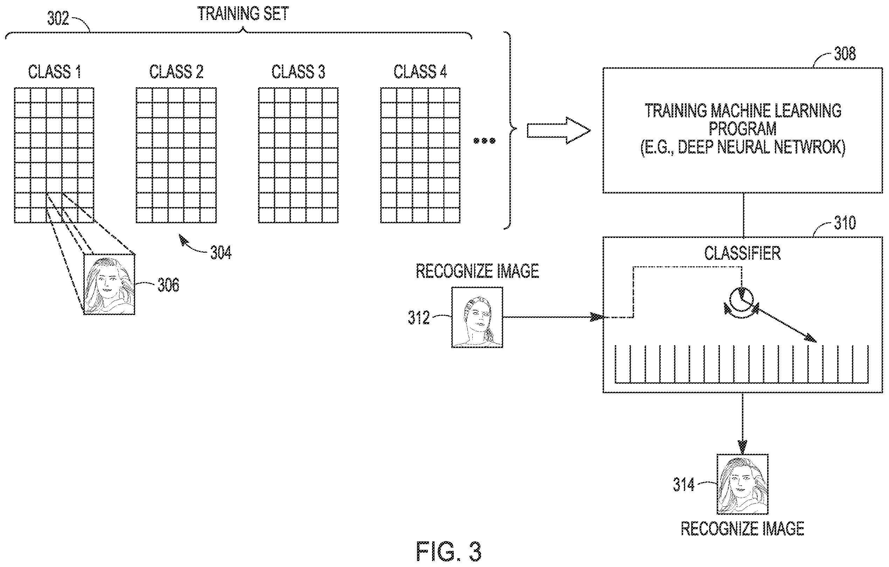

FIG. 3 illustrates the training of an image recognition machine learning program, in accordance with some embodiments. The machine learning program may be implemented at one or more computing machines. Block 302 illustrates a training set, which includes multiple classes 304. Each class 304 includes multiple images 306 associated with the class. Each class 304 may correspond to a type of object in the image 306 (e.g., a digit 0-9, a man or a woman, a cat or a dog, etc.). In one example, the machine learning program is trained to recognize images of the presidents of the United States, and each class corresponds to each president (e.g., one class corresponds to Barack Obama, one class corresponds to George W. Bush, etc.). At block 308 the machine learning program is trained, for example, using a deep neural network. At block 310, the trained classifier, generated by the training of block 308, recognizes an image 312, and at block 314 the image is recognized. For example, if the image 312 is a photograph of Bill Clinton, the classifier recognizes the image as corresponding to Bill Clinton at block 314.

FIG. 3 illustrates the training of a classifier, according to some example embodiments. A machine learning algorithm is designed for recognizing faces, and a training set 302 includes data that maps a sample to a class 304 (e.g., a class includes all the images of purses). The classes may also be referred to as labels. Although embodiments presented herein are presented with reference to object recognition, the same principles may be applied to train machine-learning programs used for recognizing any type of items.

The training set 302 includes a plurality of images 306 for each class 304 (e.g., image 306), and each image is associated with one of the categories to be recognized (e.g., a class). The machine learning program is trained 308 with the training data to generate a classifier 310 operable to recognize images. In some example embodiments, the machine learning program is a DNN.

When an input image 312 is to be recognized, the classifier 310 analyzes the input image 312 to identify the class (e.g., class 314) corresponding to the input image 312.

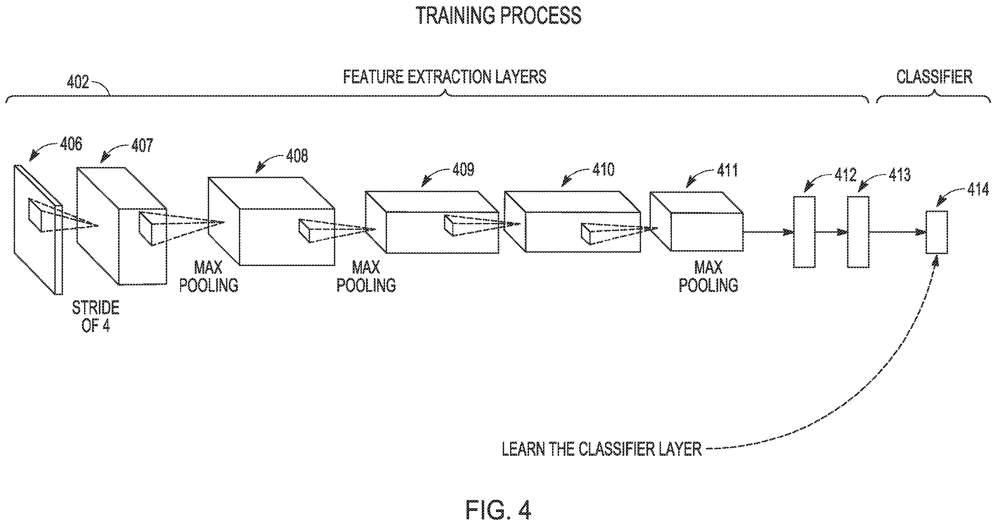

FIG. 4 illustrates the feature-extraction process and classifier training, according to some example embodiments. Training the classifier may be divided into feature extraction layers 402 and classifier layer 414. Each image is analyzed in sequence by a plurality of layers 406-413 in the feature-extraction layers 402.

With the development of deep convolutional neural networks, the focus in face recognition has been to learn a good face feature space, in which faces of the same person are close to each other, and faces of different persons are far away from each other. For example, the verification task with the LFW (Labeled Faces in the Wild) dataset has been often used for face verification.

Many face identification tasks (e.g., associated with the datasets MegaFace and LFW) are based on a similarity comparison between the images in the gallery set and the query set, which is essentially a K-nearest-neighborhood (KNN) method to estimate the person's identity. In the ideal case, there is a good face feature extractor (inter-class distance is always larger than the intra-class distance), and the KNN method is adequate to estimate the person's identity.

Feature extraction is a process to reduce the amount of resources required to describe a large set of data. When performing analysis of complex data, one of the major problems stems from the number of variables involved. Analysis with a large number of variables generally requires a large amount of memory and computational power, and it may cause a classification algorithm to overfit to training samples and generalize poorly to new samples. Feature extraction is a general term describing methods of constructing combinations of variables to get around these large data-set problems while still describing the data with sufficient accuracy for the desired purpose.

In some example embodiments, feature extraction starts from an initial set of measured data and builds derived values (features) intended to be informative and non-redundant, facilitating the subsequent learning and generalization steps. Further, feature extraction is related to dimensionality reduction, such as be reducing large vectors (sometimes with very sparse data) to smaller vectors capturing the same, or similar, amount of information.

Determining a subset of the initial features is called feature selection. The selected features are expected to contain the relevant information from the input data, so that the desired task can be performed by using this reduced representation instead of the complete initial data. DNN utilizes a stack of layers, where each layer performs a function. For example, the layer could be a convolution, a non-linear transform, the calculation of an average, etc. Eventually this DNN produces outputs by classifier 414. In FIG. 4, the data travels from left to right and the features are extracted. The goal of training the artificial neural network is to find the parameters of all the layers that make them adequate for the desired task.

As shown in FIG. 4, a "stride of 4" filter is applied at layer 406, and max pooling is applied at layers 407-413. The stride controls how the filter convolves around the input volume. "Stride of 4" refers to the filter convolving around the input volume four units at a time. Max pooling refers to down-sampling by selecting the maximum value in each max pooled region.

In some example embodiments, the structure of each layer is predefined. For example, a convolution layer may contain small convolution kernels and their respective convolution parameters, and a summation layer may calculate the sum, or the weighted sum, of two pixels of the input image. Training assists in defining the weight coefficients for the summation.

One way to improve the performance of DNNs is to identify newer structures for the feature-extraction layers, and another way is by improving the way the parameters are identified at the different layers for accomplishing a desired task. The challenge is that for a typical neural network, there may be millions of parameters to be optimized. Trying to optimize all these parameters from scratch may take hours, days, or even weeks, depending on the amount of computing resources available and the amount of data in the training set.

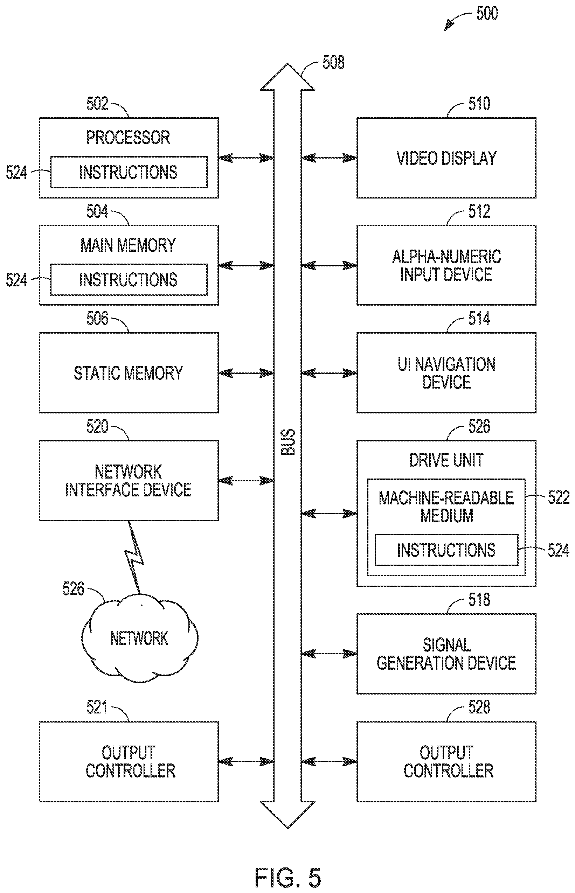

FIG. 5 illustrates a circuit block diagram of a computing machine 500 in accordance with some embodiments. In some embodiments, components of the computing machine 500 may store or be integrated into other components shown in the circuit block diagram of FIG. 5. For example, portions of the computing machine 500 may reside in the processor 502 and may be referred to as "processing circuitry." Processing circuitry may include processing hardware, for example, one or more central processing units (CPUs), one or more graphics processing units (GPUs), and the like. In alternative embodiments, the computing machine 500 may operate as a standalone device or may be connected (e.g., networked) to other computers. In a networked deployment, the computing machine 500 may operate in the capacity of a server, a client, or both in server-client network environments. In an example, the computing machine 500 may act as a peer machine in peer-to-peer (P2P) (or other distributed) network environment. In this document, the phrases P2P, device-to-device (D2D) and sidelink may be used interchangeably. The computing machine 500 may be a specialized computer, a personal computer (PC), a tablet PC, a personal digital assistant (PDA), a mobile telephone, a smart phone, a web appliance, a network router, switch or bridge, or any machine capable of executing instructions (sequential or otherwise) that specify actions to be taken by that machine.

Examples, as described herein, may include, or may operate on, logic or a number of components, modules, or mechanisms. Modules and components are tangible entities (e.g., hardware) capable of performing specified operations and may be configured or arranged in a certain manner. In an example, circuits may be arranged (e.g., internally or with respect to external entities such as other circuits) in a specified manner as a module. In an example, the whole or part of one or more computer systems/apparatus (e.g., a standalone, client or server computer system) or one or more hardware processors may be configured by firmware or software (e.g., instructions, an application portion, or an application) as a module that operates to perform specified operations. In an example, the software may reside on a machine readable medium. In an example, the software, when executed by the underlying hardware of the module, causes the hardware to perform the specified operations.

Accordingly, the term "module" (and "component") is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using software, the general-purpose hardware processor may be configured as respective different modules at different times. Software may accordingly configure a hardware processor, for example, to constitute a particular module at one instance of time and to constitute a different module at a different instance of time.

The computing machine 500 may include a hardware processor 502 (e.g., a central processing unit (CPU), a GPU, a hardware processor core, or any combination thereof), a main memory 504 and a static memory 506, some or all of which may communicate with each other via an interlink (e.g., bus) 508. Although not shown, the main memory 504 may contain any or all of removable storage and non-removable storage, volatile memory or non-volatile memory. The computing machine 500 may further include a video display unit 510 (or other display unit), an alphanumeric input device 512 (e.g., a keyboard), and a user interface (UI) navigation device 514 (e.g., a mouse). In an example, the display unit 510, input device 512 and UI navigation device 514 may be a touch screen display. The computing machine 500 may additionally include a storage device (e.g., drive unit) 516, a signal generation device 518 (e.g., a speaker), a network interface device 520, and one or more sensors 521, such as a global positioning system (GPS) sensor, compass, accelerometer, or other sensor. The computing machine 500 may include an output controller 528, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

The drive unit 516 (e.g., a storage device) may include a machine readable medium 522 on which is stored one or more sets of data structures or instructions 524 (e.g., software) embodying or utilized by any one or more of the techniques or functions described herein. The instructions 524 may also reside, completely or at least partially, within the main memory 504, within static memory 506, or within the hardware processor 502 during execution thereof by the computing machine 500. In an example, one or any combination of the hardware processor 502, the main memory 504, the static memory 506, or the storage device 516 may constitute machine readable media.

While the machine readable medium 522 is illustrated as a single medium, the term "machine readable medium" may include a single medium or multiple media (e.g., a centralized or distributed database, and/or associated caches and servers) configured to store the one or more instructions 524.

The term "machine readable medium" may include any medium that is capable of storing, encoding, or carrying instructions for execution by the computing machine 500 and that cause the computing machine 500 to perform any one or more of the techniques of the present disclosure, or that is capable of storing, encoding or carrying data structures used by or associated with such instructions. Non-limiting machine readable medium examples may include solid-state memories, and optical and magnetic media. Specific examples of machine readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magnetooptical disks; Random Access Memory (RAM); and CD-ROM and DVD-ROM disks. In some examples, machine readable media may include non-transitory machine readable media. In some examples, machine readable media may include machine readable media that is not a transitory propagating signal.

The instructions 524 may further be transmitted or received over a communications network 526 using a transmission medium via the network interface device 520 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi®, IEEE 802.16 family of standards known as WiMax®), IEEE 802.15.4 family of standards, a Long Term Evolution (LTE) family of standards, a Universal Mobile Telecommunications System (UMTS) family of standards, peer-to-peer (P2P) networks, among others. In an example, the network interface device 520 may include one or more physical jacks (e.g., Ethernet, coaxial, or phone jacks) or one or more antennas to connect to the communications network 526.

Some embodiments are directed to a computerized process for converting an image input (e.g., design sketch, photo or 3D solid model) of a footwear (or other apparel) item into a 3D CAD digital asset (e.g., NURBS) using machine learning techniques. Some embodiments are directed to a process for taking inputs and generating a robust digital output that could be used for design inspiration, manufacturing, marketing, creating digital assets (e.g., for use in in augmented reality (AR)/ virtual reality (VR), gaming environments, etc.). Some embodiments are disclosed herein in connection with footwear. However, the technology disclosed herein is not limited to footwear and may be expanded to any other apparel (e.g., jeans, leather jackets, skirts, etc.) or non-apparel items (e.g., tables, chairs, houses, bicycles, baseball mitts, hockey sticks, baseballs, basketballs, etc.)

At a high level, an image is provided to machine learning engines (e.g., as described in conjunction with FIGS. 1-4) for processing. The machine learning engines provide the NURBS model. The NURBS model may be used to provide an output, for example, a 3D model used for manufacturing instructions. There may be iterative refinements and adjustments of the 3D model until some metric matches the original design intent.

One example problem is that footwear (and other apparel) designers have been drawing sketches on papers or building molds and not to using 3D CAD systems to create their designs. Creating and building 3D CAD designs is both tedious and time consuming and does not necessarily leverage the artistic talents of most footwear designers. It also underutilizes the skillsets of a 3D CAD engineer which can be handled automatically with advances in machine learning systems to perform an otherwise manual iterative refinements and adjustments. Given a design (e.g. a 2D line-art, a photograph of a sketch, a sketch in a tablet, a photograph, a mesh object, or a sculpture (such as a scan of an object)), the effort and cost to translate or convert such design into a rich 3D parametric "digital asset" can be prohibitive and time consuming.

A 3D parametric rendition (e.g., NURBS) of a design object has numerous advantages in its manufacturability. Also, it can be coupled with a process for making faster consistent modifications. A rich 3D parametric asset can be a platform for digital collaboration across organizations. The 3D parametric asset can serve as a stepping stone for future use cases in augmented or virtual reality.

A process has been developed to implement NURBS to mesh conversion processes. In some cases, NURBS may include much more information than mesh since NURBS is essentially a mathematical model of the geometry. Thus, these NURBS information may readily be converted into mesh representations (or other needed digital representations of object). In some cases, computing machine(s) can manipulate templates with NURBS The manipulated templates may include layers of information with structural data and the like. The manipulated templates may include more information than a cloud of points as in a mesh.

Some alternative approaches to creating 3D assets from design may leverage the skillsets of a 3D CAD engineer. A CAD engineer may start by recreating or "copying" the original design into the 3D CAD system. Most of the time consuming and tedious work is in making iterative refinements and adjustments of the 3D copy until some metric matches the original design intent is met (see below for discussion of metrics). An example of a metric may be a 3D orthographic projection to a 2D plane to show closeness to the original 2D version.

High parameter curves have many (e.g., more than 10, more than 20, etc.) points specifying the shape. By contrast, a spline may include low parameter curves by incorporating relatively few specific by control points augmented by a mathematical relationship, making the splines easier to manipulate and less resource intensive. One approach described below converts an input image to splines and manipulates the control points of the splines to meet a target template range (e.g., based on constraints such as manufacturing constraints, footwear specific constraints, etc.) until a metric reaches a threshold value.

Some aspects include a pipeline process for footwear design that automates the rapid conversion of a design input (e.g., a sketch, a photo or a 3D solid model) into a 3D CAD digital asset (e.g., NURBS) by using machine learning. The pipeline includes multiple stages and services which may be orchestrated through a web application that provides the end-user experience. The stages in the pipeline may include: preprocessing, part identification, 3D NURBS building, and saving/ conversion.

In a preprocessing stage, computing machine(s) pre-process the design input into its respective 2D orthographic views or projections. In a part identification stage, the computing machine(s) perform a "parts-identification" procedure or semantic segmentation using a machine learning technique which identifies and delineates the various components of the footwear. These delineated components are labeled and represented by curves outlining each of them.

A 3D NURBS building stage receives, as input, the sets of labeled curves. The 3D CAD digital assets are created from the set of labeled curves. Building the 3D asset is done in a 3D CAD system using techniques including reinforcement learning, where a backend service is trained and learns how to "copy" or evolve a template footwear baseline spline in the 3D CAD system to its equivalent sets of curves from the input orthographic projections. A successful build is guided and determined through iterative comparisons and adjustments of the 3D-created asset to that of its orthographic inputs. Other constraints such as manufacturing tolerances or design category rules are applied as needed into the iterative refinement.

In a saving/conversion stage, the fully parametrized 3D asset is saved, flattened, expanded or converted into appropriate formats for downstream applications, for example, 3D or machine printing, visual rendering, and AR/VR.

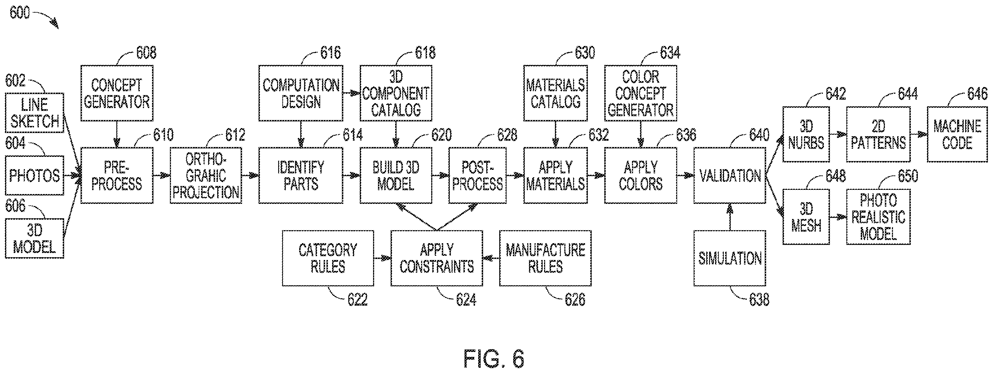

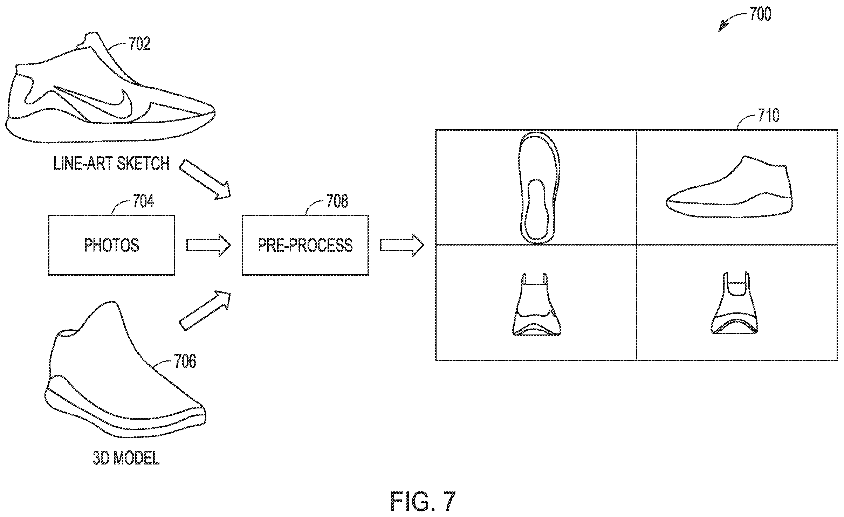

FIG. 6 is a data flow pipeline 600 for generating a digital asset representing footwear, in accordance with some embodiments. The pipeline 600 may be implemented by one or more computing machines 500. While the pipeline 600 is described herein in connection with footwear, the pipeline 600 may be used in conjunction with any other apparel or non-apparel items. While the data flow pipeline 600 is described specifically with respect to footwear, it is to be recognized and understood that the data flow pipeline 600 may implemented for other objects and articles, including but not limited to articles of apparel, equipment, and the like. The data flow pipeline is described here at a high level. Some examples of the data flow pipeline are described in greater detail in conjunction with FIGS. 7-13 below.

As shown, an input (e.g., a line sketch 602, photos 604, and/or a 3D model 606) associated with an article of footwear (or other apparel, equipment, etc.) is provided to a pre-process engine 610. A concept generator 608 also provides data to the pre-process engine 610. The concept generator 608 may implement a generative adversarial network (GAN) machine learning engine or any other engine that can automatically (or, alternatively, manually) synthesize new footwear sketches and designs. The GAN machine learning engine may also complement, supplement or augment unavailable or missing views from the available ones. The pre-process engine 610 outputs an orthographic projection 612, which is used by an identify parts engine 614 to identify parts of the article of footwear. The identified parts are used by a build 3D model engine 620 to build a 3D model of an article of footwear corresponding to the article of footwear. A computational design 616 is provided to a 3D component catalog 618, which provides input to the build 3D model engine 620, and performs functional design optimization and computational evaluations of the footwear to forecast real-world performance. Category rules 622 (e.g., for categories of footwear, such as basketball, soccer, running, lifestyle, and the like) and manufacture rules 626 are provided to an apply constraints engine 624, which provides constraints to apply by the build 3D model engine 620 and a post-process engine 628. The 3D model built by the build 3D model engine 620 is provided to the post-process engine 628. The post-process engine 628 adds other characteristics and properties to the 3D asset, such as grading the 3D asset for different sizes, adult-youth-child configuration, or nuances optimized for gender fit, comfort, performance, and function. The post-process engine 628 may also provide other dimensions and values which may be used to make the 3D asset it a manufacturable part or component. A materials catalog 630 and the output of the post-process engine 628 are provided to an apply materials engine 632. The apply materials engine 632 identifies materials and provides representations of the identified materials to the apply colors engine 636. A color concept generator 634 generates color concepts for the apply colors engine 636. The applied colors are provided for validation 640 based on a simulation 638. The results of the validation 640, if positive, are used to generate 3D NURBS 642, 2D patterns 644, and machine code 646 (e.g., for 3D printing or manufacturing). The results of the validation 640, if positive, are used to generate a 3D mesh 648 and a photo realistic model 650. The pipeline 600 of FIG. 6 is "multi-directional" and multi-faceted in that appropriate inputs can be started at any relevant stage, or step of the pipeline, to either compose and build the downstream outputs for the 3D asset, or decompose the 3D asset upstream into its smallest or nominal article composition allowable in any of the pipeline stages.

The computational design 616 may include a computational engine that performs functional design optimization and computational evaluations of the footwear (or other apparel, equipment, etc.) to forecast real-world performances. The 3D component catalog 618 may include collection of readily footwear (or other apparel, equipment, etc.) components, previously or concurrently generated or archived, which can be used to build the 3D model or for computational design. The category rules 622 may include a knowledgebase (e.g., represented as a list or collection) of rules from the various categories (such as basketball, soccer, running, lifestyle, and the like) applied to footwear (or other apparel, equipment, etc.) development (e.g., warning that using RED color with WHITE fabric may cause color bleeding). The manufacture rules 626 may include a knowledgebase (e.g., represented as a list or collection) of factory and manufacturing rules applied to footwear development. For example, some undercuts may be of a certain angle and thickness to ensure moldability. Some etch cuts must be larger that X due to factory/ machine capability or tolerances. Stitch spacing, stitch widths, might not be closer than a certain amount. Stitch ordering or layering rules may be included in the manufacture rules 626.

The post-process engine 628 may add other properties to the 3D asset like grading it for different sizes, adult-youth-child configuration, or nuances optimized for gender fit, comfort, performance, and function, plus other dimensions and values which makes it a manufacturable part or component. The materials catalog 630 may include a GAN engine (or other machine learning engine) that generates, suggests, recommends materials and combinations of materials for the various footwear articles. This may be done holistically.

The color concept generator 634 may include a GAN engine (or other machine learning engine) that generates, suggests, and recommends single colors or combinations of colors for the various footwear (or other apparel, equipment, etc.) articles. This may be done holistically. The validation 640 may include an engine to provide feedback or a final check to the user for inputs applied so far prior to it being finally processed later stages of the pipeline 600. The validation 640 may also stage cost or bill of materials analysis. The 3D mesh 648 may include a 3D CAD object made of polygonal meshes stitched together.

The 3D mesh 648 may be used to be the primary format of choice in the animation industry because it renders quickly. The 3D mesh 648 may include a 3D "wireframe" of the object. It may be similar to a point cloud but instead of points, the 3D mesh 648 may be formed of connected polygons.

In some cases, the 3D mesh 648 is different from the 3D NURBS 642. 3D mesh curves include polygonal patterns meshed or joined together to form a structure or the drawing. Unlike the NURBS curves, 3D mesh curves may lack rich parameters, such as the control points of a spline (e.g., a spline is a NURBS curve), where one can adjust the curvature of the curve.

A first stage, as illustrated, for example in FIG. 7, includes preprocessing 610 of the original artistic design rendition to generate the orthographic projection 612. This stage takes the original design artwork (line sketch 602, photos 604, and/or 3D model 606) and decomposes it into the orthographic projection 612. The orthographic projection 612 may include 2D orthographic views (e.g., top, left, right, back, front, bottom). If these views are already available, for example with the 2D line-art input, some of these steps in the first stage may be skipped. If some views are missing, these can be artistically generated by the designer, or with the use of a Generative Adversarial Network (GAN) machine learning engine that is trained to synthesize the other unavailable "missing" 2D orthographic views from the available one. For example, if only the left-side view of the footwear is available, the GAN engine may generate a top view, a front view, a back view, a bottom view, and a right-side equivalent view. The GAN engine may continually create and generate other views until a set meets the designer's intent. For a 3D model 606 or sculpted design, the orthographic projections 612 may be the perspective views of the model. The GAN machine learning engine may implement some of the concepts described in FIGS. 1-4.

FIG. 7 is a data flow pipeline 700 representing preprocessing (e.g., by pre-process engine 610), in accordance with some embodiments. As shown, a line-art or sketch 702 of footwear, photos 704 of footwear, and/or a 3D model 706 of footwear are provided to pre-process engine 708 (which may correspond to the pre-process engine 610). The output of the pre-process engine 708 is the orthographic views 710 of the footwear.

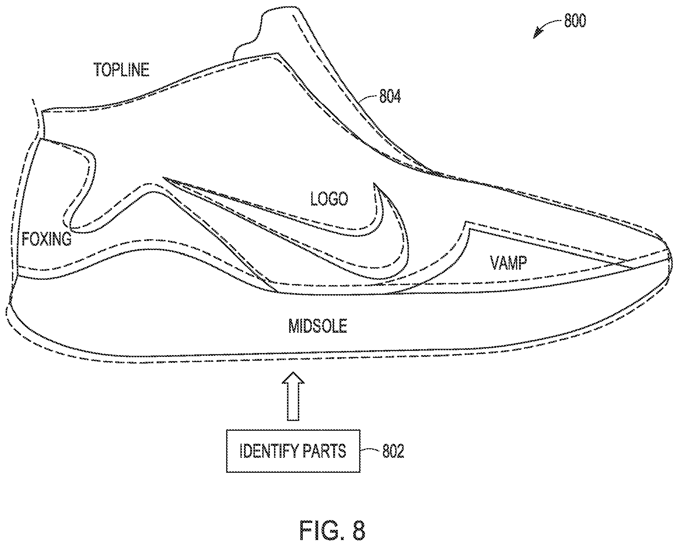

Returning to FIG. 6, a second stage (as shown, for example, in FIG. 8) is smart automated parts identification. This stage uses the orthographic views in the orthographic projection 612 and applies a machine learning identification process (identify parts engine 614) to segment and delineates the various components that makes up original design object (or the footwear).

FIG. 8 is a data flow pipeline 800 representing part identification, in accordance with some embodiments. As shown, the identify parts engine 804 (which implements a smart automated parts identification process, e.g., corresponding to identify parts engine 614) identifies the parts of the footwear 804. As illustrated, the topline, foxing, logo, midsole, and vamp are identified.

Returning to FIG. 6, during training of the identify parts engine 614, a machine learning program under the semantic segmentation category is trained to recognize and classify parts of the design. For a footwear example, it is trained to classify the various parts of a footwear item - e.g., midsole, outsole, vamp, foxing, logo, lace guard, etc. One technique which may be applied here generates several line-art variations of the components using 2D transformations such as rotation, scaling, etc. For example, the logo is rotated, or enlarged, or shrunk, or displaced, or any combination of these operations. This augmented data set is used to train a machine learning classification engine to identify and classify the component parts. This same transformation is applied to each part of the footwear so the trained engine can better identify the part.

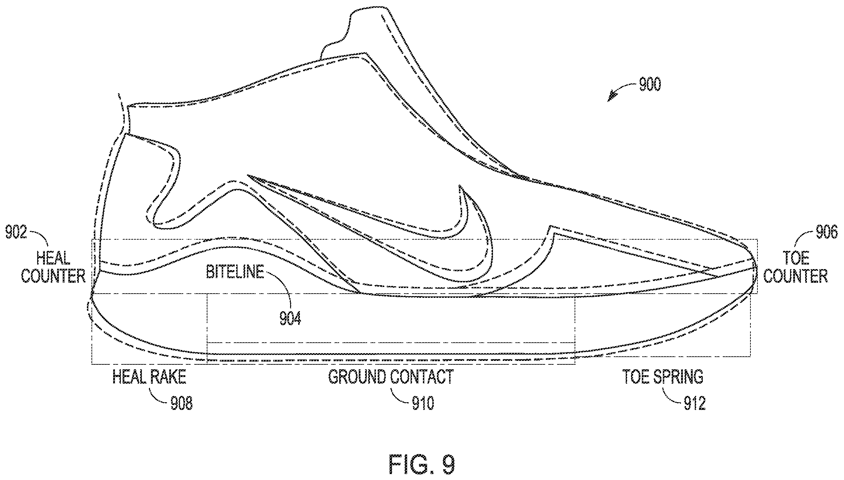

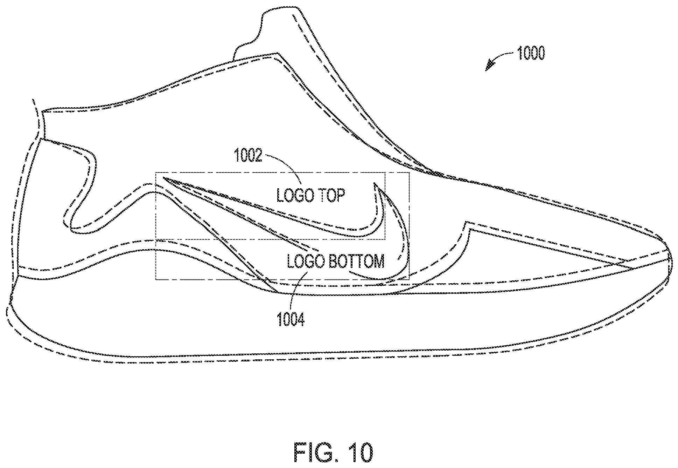

In the smart part classification/ sematic segmentation phase, with the trained machine learning engine described above, a classification technique is used to identify rectangular subsections of the original 2D line-art that contains the component of interests. For example, the trained machine learning engine draws a box around the logo, the midsole, etc. This is recursively applied as much as needed to hierarchically subclassify curves/segments that make up a component. For the midsole example (see FIG. 9), this may be used to further break down the component 2D line-art curves into subcomponents such as the biteline, the ground contact, the heel rake, the heel spring, toe spring, and toe counter. For the logo (see FIG. 10), this is applied to identify the logo top portion versus the logo bottom segment.

FIG. 9 illustrates bounding boxes identifying the components of a midsole of footwear 900, in accordance with some embodiments. As shown, the midsole of the footwear 900 includes bounding boxes for the heel counter 902, the biteline 904, the toe counter 906, the heel rake 908, the ground contact 910, and the toe spring 912.

FIG. 10 illustrates bounding boxes identifying the components of a logo of footwear 1000, in accordance with some embodiments. As shown, the logo of the footwear 1000 includes bounding boxes for the logo top 1002 and the logo bottom 1004.

It should be noted that, while FIGS. 9-10 describe the bounding box concept as applied to certain visual components of footwear, the bounding box concept may be applied to any visual components of footwear, and is not limited to those listed here. Furthermore, the technology described herein is not limited to footwear and may be expanded to any other apparel (e.g., jeans) or apparel components (e.g., pocket(s), belt loop(s), zipper, and button of jeans). The technology may be expanded even further to non-apparel items (e.g., dining table) or components of non-apparel items (e.g., table leg(s) and tabletop of dining table)

One challenge of machine learning in this field is reducing the search space. The instant disclosure solves the reducing search space challenge by first classifying a first level of bounding boxes then drilling down into each bounding box of the first level to refine identifications. For example, it is easier to find the midsole of the footwear than to identify the heel counter, the biteline, the toe counter, etc.

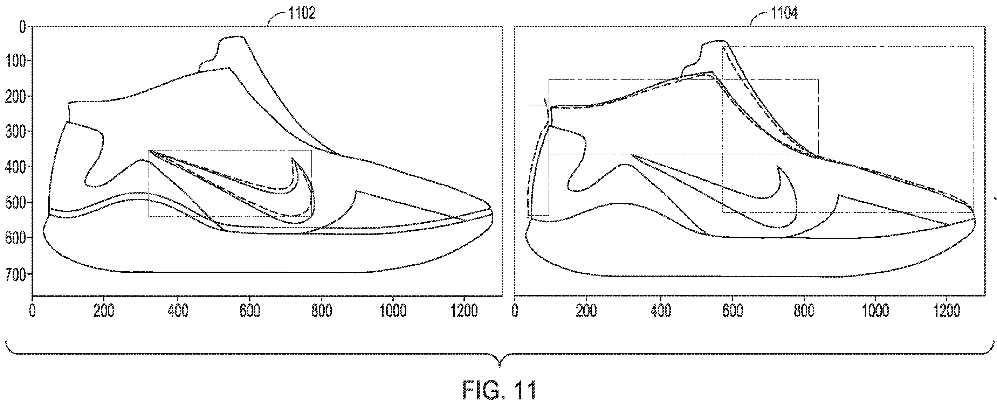

Returning to FIG. 6, with the trace-generation and post-processing 628, computing machine(s) distinguish curves that are part of the classified components and exclude those that are not. The exclusion processing may be useful since the 2D curves of the other classified segments (e.g., the biteline and the vamp intersects) may also be displayed or captured within the same rectangular bounding box classifier. Once the classifier has generated a bounding box containing the 2D curve of interest (e.g., biteline), plus possibly including other curves (e.g., vamp and foxing), a set of points are identified on the curve segment of interest, e.g., the edge points ("beginning" and "end" points). These points are the "guidepost" or "guide points" used to regenerate the curve from the original 2D line-art (see FIG. 11). With these "guide points" in place, the computing machine(s) identify the mathematical relationship described above by retracing the set of pixels in the original 2D line-art by finding the "shortest path" between these points that make up the curve in what may be referred to as "trace-generation." For curves that are multi-pixels in width or size, an "averaging" technique may be applied to "thin" down the curve - e.g., for 3 pixels width, take the middle pixel, etc. The outline of each of the curves that make up the classified parts are subsequently labeled. This distinct labeling and curve tracing of the components may be useful to ensure that each component can be recreated downstream.

FIG. 11 is a diagram 1100 illustrating examples of footwear components 1102 and 1104 marked using bounding boxes, in accordance with some embodiments.

Returning to FIG. 6, the process of generating NURBS from input images/ drawings to specific manufacturing constraints for footwear is done by the build 3D model engine 620. The build 3D model engine 620 may leverage a reinforcement learning engine. The reinforcement learning engine may be implemented using the techniques described in conjunction with FIGS. 1-4. In the build 3D model engine 620, the manufacturing constraints become part of the reinforcement learning engine's code (which uses artificial intelligence (AI) / machine learning (ML) and heuristics) as a form of "boundary conditions." The 3D NURBS may be rendered if these rules and constraints are met, and so the reinforcement learning engine iterates until such conditions are met.

The identify parts engine 614 draws out the part of interest (e.g., logo) so that it can be imported into the build 3D model engine 620. Once the classifier identifies the part of interest and creates a bounding box, it may also have points that make up the outline of the part (e.g., logo outline). The identify parts engine 614 may retrace the part's outline using the pixels available on the original image and which coincide with the points identified by the classifier. Some aspects may leverage the pixel data points present in the original image to increase or supplement the points identified by the classification/ segmentation stage.

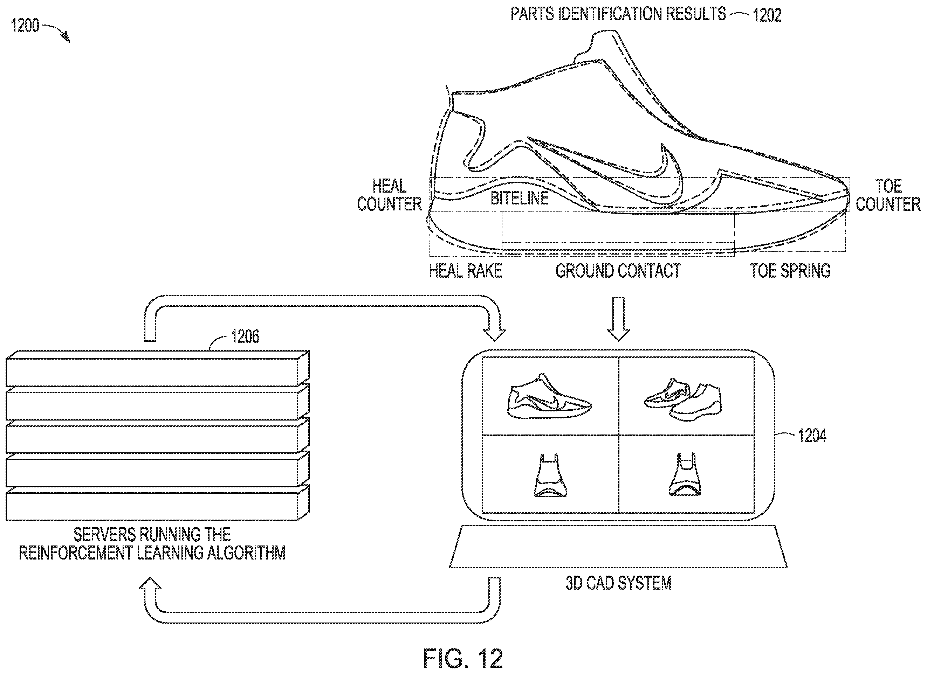

The build 3D model engine 620 leverages reinforcement learning (RL) to address the continual iterative refinements and adjustments of 3D to 2D pattern engineering (see FIG. 12). The build 3D model engine 620 creates 3D parametric NURBS assets from an original design rendition (e.g., sketches, photos, 3D molds, and the like created by an artist).

FIG. 12 is a data flow pipeline 1200 representing building of 3D assets, in accordance with some embodiments. As shown, a parts identification result 1202 is provided to a 3D CAD system 1204. The 3D CAD system 1204 iteratively communicates with servers 1206 running the generative learning engine or RL engine to build the 3D assets.

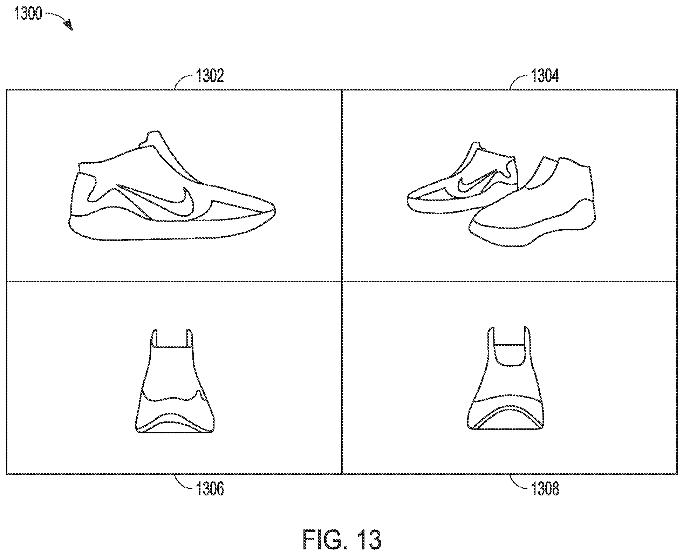

FIG. 13 illustrates example 3D model 1300 details of footwear, in accordance with some embodiments. As shown, the 3D model 1300 includes views 1302, 1304, 1306, and 1308 of the footwear from different viewing positions or viewing angles.

After the "smart automated parts identification" by the identify parts engine 614 identifies, and labels (e.g., using bounding boxes, guide points, and/or curves), the various curve components of the 2D line-art footwear design, these curves are imported into the build 3D model engine 620. These curves are now in the form of a list of three-dimensional (e.g., XYZ) coordinates, orientations info, scaling factors, labels, etc.

The build 3D model engine 620 proceeds with the generative learning engine or RL engine, interacting iteratively with the 3D CAD system to build the starting 3D model, or refine and adjust a 3D starting model of a baseline footwear template, evolving and "morphing" it into the original design intent through some pre-defined success criteria (e.g., footwear manufacturing constraints of the apply constraints engine 624). This iterative process moves points on the initial curve in a 3D CAD system until a new curve which matches the original design. The final evolution of the 3D model or the template curves, is rendered into its 3D shape through a code sequence for building a footwear item (e.g. 3D CAD software definition file). Some examples of the operations involved are described in detail below.

In operation of the build 3D model engine 620, computing machine(s) import the target curves generated by the "smart automated parts identification" by the identify parts engine 614 into a 3D CAD engine. The computing machine, using the 3D CAD engine, rescales, repositions, realigns, reorients the target curves to wrap the footwear profile around a digital space using the generative learning or RL engine. Then also using the generative learning or RL engine, the computing machine(s) iteratively adjust the splines in the baseline footwear template by moving the control points until the splines match their target curves. To ensure that the constraints are learned and encapsulated in an automated way, and not merely coded as a set of heuristics, the 3D footwear build and rendering operations are part of the whole feedback loop of the generative learning or RL engine. The generative learning or RL engine learns how to align template splines to target curves consistently with the constraints. Once a 3D parametric footwear object is built, it is exploded and unrolled (e.g., flattened into something that can be cut from a sheet of material) into its component pieces. Some parts are generatively decorated and/or designed, whereas some parts, for example the footwear uppers, are flattened into 2D panels as manufacturable patterns. The 2D panels may also be used as a starting template where it is iteratively RL adjusted such that when it is wrapped on a digital footwear, its orthographic projections match its target 2D curves.

In some cases, the use of a shoe template may not be necessary when it can be generated on-the-fly through a generative machine learning system. In some cases, there is a template target that is used but this could instead potentially be generated using machine learning techniques, e.g., the starting point could be generated by a GAN.

In some embodiments, these created 3D assets form a standard and consistent basis or foundation for adjacent workstreams. These 3D designs are fed back into the build 3D model engine 620 to simulate its performance establishing a full feedback loop for a better comprehensive design cycle or process. For example, the computing machine(s) could perform physics simulation (e.g., traction, friction, etc.) on virtual 3D object(s) and more attributes based on the physics simulation. Traction may include fidelity plus performance as constraints. The optimization may be based on cost, performance, materials used, and the like. Multivariant optimization is possible.

In the post-process engine 628, additional "rules and constraints" are applied to finesse the final 3D asset. Manufacturing constraints such as minimum etch spacings or tolerances may be applied. Footwear stitch spacing, stitch widths, and stitch ordering/ layering may also be applied. Different rules may be adopted for different footwear product categories. Examples of footwear categories are basketball footwear, football footwear, golf footwear, and running footwear. This process is done both in-sync with the building of the 3D model by the build 3D model engine 620, and also as a post-processing step after the building of the 3D model. This process imbues the 3D asset with the parametric parameters, dimensions, and values which make it a manufacturable part or component.

The apply materials engine 632 and the apply colors engine 636 apply and assigns material attributes to component(s) of the 3D asset. Examples of these material attributes are colors or hue, type of upper material (e.g., leather, synthetics, etc.), composition of the midsole foam (e.g., ethyl vinyl acetate EVA, Polyurethane PU, etc.). Color/ hue assignment and application may be done heuristically based on perceived marketing demand or designers' aspiration. Alternatively, it can be performed generatively using a machine learning GAN system "allowing" it explore adjacencies and unexplored possibilities.

The computing machine(s) may generate a bill of materials and manufacturable parts. The computing machine(s) manage and compile the materials and procedures to build the 3D asset into a final physical product. These operations allow for better planning and cost analysis. These operations may also provide an instantaneous feedback loop to the previous stages to trigger a search for alternative materials or other constraints to meet, for example, a cost objective. These operations may provide a "recipe," including ingredients and procedures, to bring the footwear from its 3D digital form into its physical form.

The computing machine(s) may provide photo and video realistic rendering, producing the visual showcase for the design. Attributes such as shadows, reflections, lighting, and sounds may be added and infused to the 3D digital asset making it visually appealing and realistic to the lay person or consumer.

Advantages of some embodiments may include one or more of the following: (i) improved productivity for designer and developer through less manual manipulations and processing; (ii) fungibility of the pipeline approach - some stages can be added, expanded, and/or enhanced anytime; (iii) full automation makes it less error prone, produce consistent outputs and with predictable deviations; (iv) enabling quick cost analysis and fast development review; (v) shortening development cycle and go-to-market timeframe, (vi) providing a rapid worldwide scale, always-on, remote collaboration platform for designers, developers, cost analysts, marketing, and the like; (vii) the 3D assets create a standard and consistent basis or foundation for adjacent workstreams (e.g. computational designs, high resolution rendering, etc.); (viii) the 3D assets lay the groundwork for emerging downstream applications such as augmented and virtual reality; and (ix) minimizing physical contacts or allows contactless development.

In some embodiments, computing machine(s) import the target curves from the semantic segmentation service into the 3D CAD engine. The computing machine(s) rescale, reposition, realign, reorient all these target curves using some heuristics so the downstream 3D CAD engine code can build a footwear item from it. Some embodiments recreate these new curves (and splines) instead of manipulating the splines in the baseline footwear template. For each of the target curve, the computing machine(s) create a new straight-line spline with 20 (or another number of) control points beginning and ending at the end point of each target curve. The computing machine(s) perform another transformation operation of reorienting and rescaling to a "standard scale" for each of these target curve/ straight-line spline pairs. The computing machine(s) apply reinforcement learning to the straight-line spline manipulating the 20 control points until it matches its target curve. The computing machine(s) transform back the finalized splines to the original scale and orientation so the 3D CAD engine code can be applied. Reduction of control points is sometimes done using a mathematical function.

For the reinforcement learning operations above, some aspects have defined and quantified a "match" to mean that the root sum square (RSS) of the difference between the points of the target curve and the spline approaches zero, per Equation 1. An example function of the RSS is used as the reward function in the reinforcement learning algorithm.

$$RSS = \sqrt{\sum (x - x_c)_i^2} \to 0$$

*Equation 1*

According to some embodiments, computing machine(s) import the target curves from the semantic segmentation service into the 3D CAD engine. The computing machine(s) rescale, reposition, realign, reorient the target curves using some heuristics and convert them into 3D splines so the downstream 3D CAD engine code can build a footwear item from it.

Some embodiments assimilate all or a portion of the heuristics used (e.g., based on constraints and subject matter expertise) into the reinforcement learning process. Some embodiments apply the methodologies used in reinforcement learning engine(s) to perform these iterative refinement and adjustments to automate the building of a 3D parametric version of any design input. Specifically, this can be used to create 3D parametric NURBS from a 2D line-art.

According to some implementations, computing machine(s) import the target curves from the semantic segmentation service into the 3D CAD engine. The computing machine(s) rescale, reposition, realign, reorient all these target curves to wrap its shoe profile around a digital last using RL. The computing machine(s), also using RL, iteratively adjust the splines in the baseline footwear template by moving the control points until the splines matches their target curves. In some embodiments, to ensure that the constraints and subject matter expertise are learned and encapsulated in an automated way, and not merely coded as a set of heuristics, the 3D footwear build and rendering steps that is in the 3D CAD engine code will be part of the whole reinforcement learning feedback loop. The RL engine may learn what makes or breaks the 3D CAD engine code in this context, along with how to align template splines to target curves. Once a 3D parametric footwear object is built, it can be exploded or unrolled into its component pieces. Some parts can be generatively decorated or designed, whereas some parts like the shoe uppers can be flattened into 2D panels as manufacturable patterns. In some cases, the 2D panels can also be used as a starting template where it is iteratively RL adjusted such that when it is wrapped on a digital footwear item last, its orthographic projections match its target 2D line-art curves.

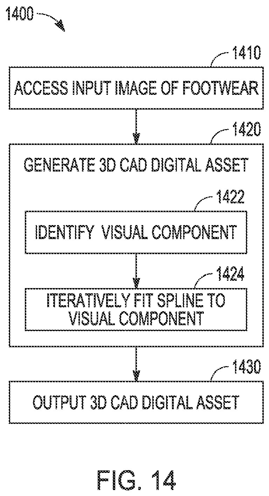

FIG. 14 is a flow chart of an example method 1400 for generating a digital asset representing footwear (or alternatively, other object(s) such as apparel or equipment), in accordance with some embodiments. The method 1400 may be implemented using one or more computing machines, for example, the computing machine 500. The reversed process of starting with the digital asset and then going upstream creating the footwear pixel or voxel based images may also be implemented.

At operation 1410, the computing machine(s) access an input image of footwear (or alternatively, other object(s) such as apparel or equipment). The input image is a pixel or voxel based image.

At operation 1420, the computing machine(s) generate, based on the input image and using machine learning engines implemented at the computing machine(s), a 3D CAD digital asset comprising a NURBS model of the footwear (or alternatively, other object(s) such as apparel or equipment). The operation 1420 may include operations 1422 and 1424.

At operation 1422, the computing machine(s) identify, using a trained classification engine, a visual component of the footwear (or alternatively, other object(s) such as apparel or equipment). At operation 1424, the computing machine(s) iteratively fit, for the visual component of the footwear, a spline using a trained reinforcement learning engine until the spline is within a predefined average distance from the visual component. The 3D CAD digital asset include the spline. The machine learning engines include the trained classification engine and the trained reinforcement learning engine.

In some embodiments, the classification engine is trained using a training dataset including images representing visual components of footwear and transformations of representations of visual components of footwear. The transformations may include one or more of a scaling, a rotation, and a displacement. The trained classification engine may generate a bounding box for the visual component. The bounding box may include at least a set of first pixels indicated as being associated with the visual component and at least a set of second pixels indicated as not being associated with the visual component. The trained classification engine may include a first sub-engine for identifying a first part of the visual component and a second sub-engine for identifying a second part of the visual component. The second part of the visual component may be a sub-component of the first part of the visual component. The second sub-engine may operate on the first part of the visual component identified by the first sub-engine.

Iteratively fitting the spline may include ensuring that the spline meets manufacturing constraint criteria (or any other criteria that can be measured or compared to a metric). The trained reinforcement learning engine may operate based on at least one manufacturing tolerance constraint, and/or at least one design category rule constraint. The visual component may include at least one of: a midsole, an outsole, a vamp, a foxing, a lace guard, a heel counter, a heel rake, a biteline, a ground contact, a toe spring, and a toe counter.

At operation 1430, the computing machine(s) provide an output representing the 3D CAD digital asset. In some embodiments, the computing machine(s) iteratively refine, at the one or more computing machines, the 3D CAD digital asset based on metrics provided by an end-user until one or more metrics are within a predefined range. The computing machine(s) provide an output representing the refined 3D CAD digital asset. The iterative refining may include: representing the 3D CAD digital asset as a plurality of splines; and iteratively manipulating one or more control points of the plurality of splines based on the predefined range. In some cases, the output representing the 3D CAD digital asset is provided to a downstream engine. The downstream engine may include one or more of: a 3D printing engine, a visual rendering engine, and an augmented/ virtual reality engine. The computing machine(s) may control, based on the 3D CAD digital asset, manufacturing of the footwear represented by the 3D CAD digital asset at one or more manufacturing machines.

In some embodiments, the input to the method 1400 is a pixel or voxel based file, whereas the output is a NURBS mathematical representation of curves and surfaces of the modeled footwear item. The output may be used to generate manufacturing instructions for the footwear, which may be provided to manufacturing machine(s).

In some embodiments, the spline comprises control points and a mathematical function based on the control points, wherein iteratively fitting the spline comprises transforming the control points of the spline based on the visual component.

In some embodiments, prior to operation 1410, the computing machine(s) preprocess the input image to transform the input image into one or more 2D orthographic views. The preprocessing may include one or more 2D transformations.

In some embodiments, the trained classification engine comprises a GAN engine trained to synthesize unavailable 2D views based on the preprocessed 2D orthographic views. The visual component is identified based on the preprocessed 2D orthographic views and the synthesized 2D views.

Some embodiments are described with respect to images, models, and digital assets representing footwear. However, the technology disclosed herein is not limited to footwear and may be used for other items (e.g., apparel, equipment, object(s), etc.) that can be modeled in 2D or 3D. Examples of other items for which embodiments of the technology may be used, in addition to or in place of footwear include: athletic equipment, vehicle tires, children's toys, mobile phone cases, desktop ornaments, holiday decorations, candle holders, and the like. The technology may be useful for any item that is suitable for 3D printing.

Some embodiments are described as numbered examples (Example 1, 2, 3, etc.). These are provided as examples only and do not limit the technology disclosed herein.

Example 1 is a method comprising: accessing, at one or more computing machines, an input image of footwear, the input image comprising a pixel or voxel based image; generating, based on the input image and using machine learning engines implemented at the one or more computing machines, a three-dimensional CAD (computer-aided design) digital asset comprising a NURBS (non-uniform rational basis spline) model of the footwear, wherein generating the three-dimensional CAD digital asset comprises: identifying, using a trained classification engine, a visual component of the footwear; and iteratively fitting, for the visual component of the footwear, a spline using a trained reinforcement learning engine until the spline is within a predefined average distance from the visual component, wherein the three-dimensional CAD digital asset comprises the spline, wherein the machine learning engines comprise the trained classification engine and the trained reinforcement learning engine; and providing an output representing the three-dimensional CAD digital asset.

In Example 2, the subject matter of Example 1 includes, wherein the spline comprises control points and a mathematical function based on the control points, wherein iteratively fitting the spline comprises transforming the control points of the spline based on the visual component.

In Example 3, the subject matter of Examples 1-2 includes, wherein the classification engine is trained using a training dataset comprising images representing visual components of footwear and transformations of representations of visual components of footwear, the transformations comprising one or more of a scaling, a rotation, and a displacement.

In Example 4, the subject matter of Examples 1-3 includes, wherein iteratively fitting the spline comprises ensuring that the spline meets manufacturing constraint criteria.

In Example 5, the subject matter of Examples 1-4 includes, iteratively refining, at the one or more computing machines, the three-dimensional CAD digital asset based on metrics provided by an end-user until one or more metrics are within a predefined range; and providing an output representing the refined three-dimensional CAD digital asset.

In Example 6, the subject matter of Example 5 includes, wherein iteratively refining the three-dimensional CAD digital asset comprises: representing, at the one or more computing machines, the three-dimensional CAD digital asset as a plurality of splines; and iteratively manipulating one or more control points of the plurality of splines based on the predefined range.

In Example 7, the subject matter of Examples 1-6 includes, wherein generating the three-dimensional CAD digital asset further comprises: preprocessing the input image to transform the input image into one or more two-dimensional orthographic views.

In Example 8, the subject matter of Example 7 includes, wherein the preprocessing comprises one or more two-dimensional transformations.

In Example 9, the subject matter of Examples 7-8 includes, wherein the trained classification engine comprises a GAN (generative adversarial network) engine trained to synthesize unavailable two-dimensional views based on the preprocessed two-dimensional orthographic views, wherein the visual component is identified based on the preprocessed two-dimensional orthographic views and the synthesized two-dimensional views.

In Example 10, the subject matter of Examples 1-9 includes, wherein the trained reinforcement learning engine operates based on at least one manufacturing tolerance constraint, and at least one design category rule constraint.

In Example 11, the subject matter of Examples 1-10 includes, wherein the visual component comprises at least one of: a midsole, an outsole, a vamp, a foxing, a lace guard, a heel counter, a heel rake, a biteline, a ground contact, a toe spring, and a toe counter.

In Example 12, the subject matter of Examples 1-11 includes, wherein the trained classification engine generates a bounding box for the visual component, the bounding box comprising at least a set of first pixels indicated as being associated with the visual component and at least a set of second pixels indicated as not being associated with the visual component.

In Example 13, the subject matter of Examples 1-12 includes, wherein the trained classification engine comprises a first sub-engine for identifying a first part of the visual component and a second sub-engine for identifying a second part of the visual component, wherein the second part of the visual component is a sub-component of the first part of the visual component, and wherein the second sub-engine operates on the first part of the visual component identified by the first sub-engine.

In Example 14, the subject matter of Examples 1-13 includes, wherein the output representing the three-dimensional CAD digital asset is provided to a downstream engine, the downstream engine comprising one or more of: a three-dimensional printing engine, a visual rendering engine, and an augmented/ virtual reality engine.

In Example 15, the subject matter of Examples 1-14 includes, controlling, based on the three-dimensional CAD digital asset and using the one or more computing machines, manufacturing of the footwear represented by the three-dimensional CAD digital asset at one or more manufacturing machines.

Example 16 is a method comprising: accessing, at one or more computing machines, an input image of apparel, the input image comprising a pixel or voxel based image; generating, based on the input image and using machine learning engines implemented at the one or more computing machines, a three-dimensional CAD (computer-aided design) digital asset comprising a NURBS (non-uniform rational basis spline) model of the apparel, wherein generating the three-dimensional CAD digital asset comprises: identifying, using a trained classification engine, a visual component of the apparel; and iteratively fitting, for the visual component of the apparel, a spline using a trained reinforcement learning engine until the spline is within a predefined average distance from the visual component, wherein the three-dimensional CAD digital asset comprises the spline, wherein the machine learning engines comprise the trained classification engine and the trained reinforcement learning engine; and providing an output representing the three-dimensional CAD digital asset.

Example 17 is a method comprising: accessing, at one or more computing machines, an input image of equipment, the input image comprising a pixel or voxel based image; generating, based on the input image and using machine learning engines implemented at the one or more computing machines, a three-dimensional CAD (computer-aided design) digital asset comprising a NURBS (non-uniform rational basis spline) model of the equipment, wherein generating the three-dimensional CAD digital asset comprises: identifying, using a trained classification engine, a visual component of the equipment, and iteratively fitting, for the visual component of the equipment, a spline using a trained reinforcement learning engine until the spline is within a predefined average distance from the visual component, wherein the three-dimensional CAD digital asset comprises the spline, wherein the machine learning engines comprise the trained classification engine and the trained reinforcement learning engine; and providing an output representing the three-dimensional CAD digital asset.

Example 18 is a method comprising: accessing, at one or more computing machines, an input image of object(s), the input image comprising a pixel or voxel based image; generating, based on the input image and using machine learning engines implemented at the one or more computing machines, a three-dimensional CAD (computer-aided design) digital asset comprising a NURBS (non-uniform rational basis spline) model of the object(s), wherein generating the three-dimensional CAD digital asset comprises: identifying, using a trained classification engine, a visual component of the object(s); and iteratively fitting, for the visual component of the object(s), a spline using a trained reinforcement learning engine until the spline is within a predefined average distance from the visual component, wherein the three-dimensional CAD digital asset comprises the spline, wherein the machine learning engines comprise the trained classification engine and the trained reinforcement learning engine; and providing an output representing the three-dimensional CAD digital asset.

Example 19 is at least one machine-readable medium including instructions that, when executed by processing circuitry, cause the processing circuitry to perform operations to implement of any of Examples 1-18.

Example 20 is an apparatus comprising means to implement of any of Examples 1-18.

Example 21 is a system to implement of any of Examples 1-18.

Example 22 is a method to implement of any of Examples 1-18.

Although an embodiment has been described with reference to specific example embodiments, it will be evident that various modifications and changes may be made to these embodiments without departing from the broader scope of the present disclosure. Accordingly, the specification and drawings are to be regarded in an illustrative rather than a restrictive sense. The accompanying drawings that form a part hereof show, by way of illustration, and not of limitation, specific embodiments in which the subject matter may be practiced. The embodiments illustrated are described in sufficient detail to enable those skilled in the art to practice the teachings disclosed herein. Other embodiments may be utilized and derived therefrom, such that structural and logical substitutions and changes may be made without departing from the scope of this disclosure. This Detailed Description, therefore, is not to be taken in a limiting sense, and the scope of various embodiments is defined only by the appended claims, along with the full range of equivalents to which such claims are entitled.

Although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, a system, article, composition, formulation, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

The Abstract of the Disclosure is provided to comply with 37 C.F.R. §1.72(b), requiring an abstract that will allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in a single embodiment for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separate embodiment.

**Claims**

1. A method comprising:

   accessing, at one or more computing machines, an input image of footwear, the input image comprising a pixel or voxel based image; generating, based on the input image and using machine learning engines implemented at the one or more computing machines, a 3D (three-dimensional) CAD (computer-aided design) digital asset comprising a NURBS (non-uniform rational basis spline) model of the footwear, wherein generating the 3D CAD digital asset comprises:

      identifying, using a trained classification engine, a visual component of the footwear; and
      iteratively fitting, for the visual component of the footwear, a spline using a trained reinforcement learning engine until the spline is within a predefined average distance from the visual component, wherein the 3D CAD digital asset comprises the spline, wherein the machine learning engines comprise the trained classification engine and the trained reinforcement learning engine; and

   providing an output representing the 3D CAD digital asset.

2. The method of claim 1, wherein the spline comprises control points and a mathematical function based on the control points, wherein iteratively fitting the spline comprises transforming the control points of the spline based on the visual component.

3. The method of any preceding claim, wherein the classification engine is trained using a training dataset comprising images representing visual components of footwear and transformations of representations of visual components of footwear, the transformations comprising one or more of a scaling, a rotation, and a displacement.

4. The method of any preceding claim, wherein iteratively fitting the spline comprises ensuring that the spline meets manufacturing constraint criteria.

5. The method of any preceding claim, further comprising:

  iteratively refining, at the one or more computing machines, the 3D CAD digital asset based on metrics provided by an end-user until one or more metrics are within a predefined range; and providing an output representing the refined 3D CAD digital asset, wherein iteratively refining the 3D CAD digital asset optionally comprises:

  representing, at the one or more computing machines, the 3D CAD digital asset as a plurality of splines; and
  iteratively manipulating one or more control points of the plurality of splines based on the predefined range.

6. The method of any preceding claim, wherein generating the 3D CAD digital asset further comprises: preprocessing the input image to transform the input image into one or more 2D (two-dimensional) orthographic views.

7. The method of claim 6,

  wherein the preprocessing comprises one or more 2D transformations; or.
  wherein the trained classification engine comprises a GAN (generative adversarial network) engine trained to synthesize unavailable 2D views based on the preprocessed 2D orthographic views, and wherein the visual component is identified based on the preprocessed 2D orthographic views and the synthesized 2D views.

8. The method of any preceding claim, wherein the trained reinforcement learning engine operates based on at least one manufacturing tolerance constraint, and at least one design category rule constraint.

9. The method of any preceding claim, wherein the visual component comprises at least one of: a midsole, an outsole, a vamp, a foxing, a lace guard, a heel counter, a heel rake, a biteline, a ground contact, a toe spring, and a toe counter.

10. The method of any preceding claim, wherein the trained classification engine generates a bounding box for the visual component, the bounding box comprising at least a set of first pixels indicated as being associated with the visual component and at least a set of second pixels indicated as not being associated with the visual component.

11. The method of any preceding claim, wherein the trained classification engine comprises a first sub-engine for identifying a first part of the visual component and a second sub-engine for identifying a second part of the visual component, wherein the second part of the visual component is a sub-component of the first part of the visual component, and wherein the second sub-engine operates on the first part of the visual component identified by the first sub-engine.

12. The method of any preceding claim, wherein the output representing the 3D CAD digital asset is provided to a downstream engine, the downstream engine comprising one or more of: a 3D printing engine, a visual rendering engine, and an augmented/ virtual reality engine.

13. The method of any preceding claim, further comprising:
controlling, based on the 3D CAD digital asset and using the one or more computing machines, manufacturing of the footwear represented by the 3D CAD digital asset at one or more manufacturing machines.

14. A non-transitory machine-readable medium storing instructions which, when executed by one or more computing machines, cause the one or more computing machines to perform the method of any preceding claim.

15. A system comprising:
processing circuitry; and
a memory storing instructions which, when executed by the processing circuitry, cause the processing circuitry to perform the method of any of claims 1 to 13.

**Patentansprüche**

1. Verfahren, das Folgendes umfasst:

  Zugreifen, an einem oder mehreren Rechenmodulen, auf ein Eingabebild von Fußbekleidung, wobei das Eingabebild ein pixel- oder voxelbasiertes Bild umfasst;
  Erzeugen, basierend auf dem Eingabebild und unter Verwendung von Maschinenlernmodulen, die in einem oder mehreren Computern implementiert sind, eines digitalen 3D (dreidimensionalen) CAD (computerunterstütztes Design)-Assets, das ein NURBS (non-uniform rational basis spline)-Modell der Fußbekleidung aufweist, wobei das Erzeugen des digitalen 3D-CAD-Assets Folgendes umfasst:

Identifizieren, unter Verwendung eines trainierten Klassifizierungsmoduls, einer visuellen Komponente der Fußbekleidung; und

iteratives Anpassen, für die visuelle Komponente der Fußbekleidung, eines Splines unter Verwendung eines trainierten Verstärkungslernmoduls, bis der Spline innerhalb eines vordefinierten durchschnittlichen Abstands von der visuellen Komponente liegt, wobei das digitale 3D-CAD-Asset den Spline umfasst, wobei die Maschinenlernmodule das trainierte Klassifizierungsmodul und das trainierte Verstärkungslernmodul umfassen; und Bereitstellen einer Ausgabe, die das digitale 3D-CAD-Asset darstellt.

2. Verfahren nach Anspruch 1, wobei der Spline Steuerpunkte und eine mathematische Funktion basierend auf den Steuerpunkten umfasst, wobei iteratives Anpassen des Splines Transformieren der Steuerpunkte des Splines basierend auf der visuellen Komponente umfasst.

3. Verfahren nach einem der vorhergehenden Ansprüche, wobei das Klassifizierungsmodul unter Verwendung eines Trainingsdatensatzes trainiert wird, der Bilder umfasst, die visuelle Komponenten von Fußbekleidung repräsentieren, und Transformationen von Repräsentationen visueller Komponenten von Fußbekleidung, wobei die Transformationen eine Skalierung und/oder eine Drehung und/oder eine Verschiebung umfassen.

4. Verfahren nach einem der vorhergehenden Ansprüche, wobei das iterative Anpassen des Splines das Sicherstellen umfasst, dass der Spline Fertigungseinschränkungskriterien erfüllt.

5. Verfahren nach einem der vorhergehenden Ansprüche, das ferner Folgendes umfasst:

iteratives Verfeinern, an dem einen oder den mehreren Rechenmodulen, des digitalen 3D-CAD-Assets basierend auf Metriken, die durch einen Endbenutzer bereitgestellt werden, bis eine oder mehrere Metriken innerhalb eines vordefinierten Bereichs liegen; und Bereitstellen einer Ausgabe, die das verfeinerte digitale 3D-CAD-Asset repräsentiert, wobei das iterative Verfeinern des digitalen 3D-CAD-Asset optional Folgendes umfasst:

Repräsentieren, an dem einen oder den mehreren Rechenmodulen, des digitalen 3D-CAD-Assets als eine Vielzahl von Splines; und

iteratives Manipulieren eines oder mehrerer Steuerpunkte der Vielzahl von Splines basierend auf dem vordefinierten Bereich.

6. Verfahren nach einem der vorhergehenden Ansprüche, wobei das Erzeugen des digitalen 3D-CAD-Assets ferner Folgendes umfasst:
Vorverarbeiten des Eingabebilds, um das Eingabebild in eine oder mehrere 2D-orthographische (zweidimensionale) Ansichten zu transformieren.

7. Verfahren nach Anspruch 6,

wobei das Vorverarbeiten eine oder mehrere 2D-Transformationen umfasst; oder, wobei das trainierte Klassifizierungsmodul ein GAN (generative Adversarial Network)-Modul umfasst, das dazu trainiert ist, nicht verfügbare 2D-Ansichten basierend auf den vorverarbeiteten 2D-orthografischen Ansichten zu synthetisieren, und wobei die visuelle Komponente basierend auf den vorverarbeiteten 2D-orthografischen Ansichten und den synthetisierten 2D-Ansichten identifiziert wird.

8. Verfahren nach einem der vorhergehenden Ansprüche, wobei das trainierte Verstärkungslernmodul basierend auf mindestens einer Fertigungstoleranzbeschränkung und mindestens einer Entwurfskategorienregelbeschränkung arbeitet.

9. Verfahren nach einem der vorhergehenden Ansprüche, wobei die visuelle Komponente mindestens eines von Folgendem umfasst: eine Zwischensohle, eine Außensohle, ein Blatt, ein Plaststreifen, einen Spitzenschutz, eine Fersenkappe, einen Fersenrechen, eine Biteline, einen Bodenkontakt, eine Zehenfeder, und eine Zehenkappe.

10. Verfahren nach einem der vorhergehenden Ansprüche, wobei das trainierte Klassifizierungsmodul einen Begrenzungsrahmen für die visuelle Komponente erzeugt, wobei der Begrenzungsrahmen mindestens einen Satz erster Pixel, die als mit der visuellen Komponente assoziiert angegeben sind, und mindestens einen Satz zweiter Pixel, die als nicht mit der visuellen Komponente assoziiert angegeben sind, umfasst.

11. Verfahren nach einem der vorhergehenden Ansprüche, wobei das trainierte Klassifizierungsmodul ein erstes Submodul zum Identifizieren eines ersten Teils der visuellen Komponente und ein zweites Submodul zum Identifizieren eines zweiten Teils der visuellen Komponente umfasst, wobei der zweite Teil der visuellen Komponente eine Subkomponente des ersten Teils der visuellen Komponente ist und wobei das zweite Submodul auf dem ersten Teil der visuellen Komponente arbeitet, die durch das erste Submodul identifiziert wird.

12. Verfahren nach einem der vorhergehenden Ansprüche, wobei die Ausgabe, die das digitale 3D-CAD-Asset repräsentiert, einem Downstream-Modul bereitgestellt wird, wobei das Downstream-Modul eines oder mehrere von Folgendem umfasst: ein 3D-Druckmodul, ein visuelles Rendering-Modul und ein Augmented/Virtual-Reality-Modul.

13. Verfahren nach einem der vorhergehenden Ansprüche, das ferner Folgendes umfasst:
Steuern, basierend auf dem digitalen 3D-CAD-Asset und unter Verwendung der einen oder der mehreren Rechenmodule, der Herstellung der Fußbekleidung, die durch das digitale 3D-CAD-Asset repräsentiert wird, an einer oder mehreren Fertigungsmaschinen.

14. Nichtflüchtiges maschinenlesbares Medium, das Anweisungen speichert, die bei Ausführung durch eine oder mehrere Rechenmodule bewirken, dass das eine oder die mehreren Rechenmodule das Verfahren nach einem der vorhergehenden Ansprüche durchführen.

15. System, das Folgendes umfasst:

eine Verarbeitungsschaltung; und
einen Speicher, der Anweisungen speichert, die, wenn sie durch die Verarbeitungsschaltung ausgeführt werden, die Verarbeitungsschaltung veranlassen, das Verfahren nach einem der Ansprüche 1 bis 13 durchzuführen.

**Revendications**

1. Procédé comprenant les étapes suivantes :

accéder, au niveau d'un ou plusieurs calculateurs, à une image d'entrée de chaussure, l'image d'entrée comprenant une image à base de pixels ou de voxels ;
générer, sur la base de l'image d'entrée et à l'aide des moteurs d'apprentissage automatique mis en œuvre au niveau des un ou plusieurs calculateurs, un actif numérique de CAO (conception assistée par ordinateur) 3D (tridimensionnelle) comprenant un modèle NURBS (non-Uniform Rational Basis spline) de la chaussure, où la génération de l'actif numérique de CAO 3D comprend les étapes suivantes :

identifier, à l'aide d'un moteur de classification entraîné, une composante visuelle de la chaussure ; et
ajuster de manière itérative, pour la composante visuelle de la chaussure, une spline à l'aide d'un moteur d'apprentissage de renforcement entraîné jusqu'à ce que la spline se trouve à une distance moyenne prédéfinie de la composante visuelle, où l'actif numérique CAO 3D comprend la spline, où les moteurs d'apprentissage automatique comprennent le moteur de classification entraîné et le moteur d'apprentissage de renforcement entraîné ; et
fournir une sortie représentant l'actif numérique CAO 3D.

2. Procédé selon la revendication 1, dans lequel la spline comprend des points de contrôle et une fonction mathématique basée sur les points de contrôle, où l'ajustement itératif de la spline comprend la transformation des points de contrôle de la spline sur la base de la composante visuelle.

3. Procédé selon l'une quelconque des revendications précédentes, dans lequel le moteur de classification est entraîné au moyen d'un ensemble de données d'apprentissage comprenant des images représentant des composantes visuelles d'une chaussure et des transformations de représentations de composantes visuelles d'une chaussure, les transformations comprenant une ou plusieurs transformations parmi une mise à l'échelle, une rotation et un déplacement.

4. Procédé selon l'une quelconque des revendications précédentes, dans lequel l'ajustement itératif de la spline comprend de garantir que la spline satisfait aux critères de contrainte de fabrication.

5. Procédé selon l'une quelconque des revendications précédentes, comprenant en outre les étapes suivantes :

affiner de manière itérative, au niveau des un ou plusieurs calculateurs, l'actif numérique CAO 3D sur la base de métriques fournies par un utilisateur final jusqu'à ce qu'une ou plusieurs métriques se trouvent dans une plage prédéfinie ; et
fournir une sortie représentant l'actif numérique de CAO 3D affiné, où l'affinage itératif de l'actif numérique de CAO 3D comprend éventuellement les étapes suivantes :

représenter, au niveau des un ou plusieurs calculateurs, l'actif numérique de CAO 3D sous la forme d'une pluralité de splines ; et
manipuler de manière itérative un ou plusieurs points de contrôle de la pluralité de splines sur la base de la plage prédéfinie.

**6.** Procédé selon l'une quelconque des revendications précédentes, dans lequel la génération de l'actif numérique de CAO 3D comprend en outre :
le prétraitement de l'image d'entrée pour transformer l'image d'entrée en une ou plusieurs vues orthographiques 2D (bidimensionnelles).

**7.** Procédé selon la revendication 6,

dans lequel le prétraitement comprend une ou plusieurs transformations 2D ; ou
dans lequel le moteur de classification entraîné comprend un moteur GAN (réseau antagoniste génératif) entraîné pour synthétiser des vues 2D indisponibles sur la base des vues orthographiques 2D prétraitées, et où la composante visuelle est identifiée sur la base des vues orthographiques 2D prétraitées et des vues 2D synthétisées.

**8.** Procédé selon l'une quelconque des revendications précédentes, dans lequel le moteur d'apprentissage de renforcement entraîné fonctionne sur la base d'au moins une contrainte de tolérance de fabrication, et d'au moins une contrainte de règle de catégorie de conception.

**9.** Procédé selon l'une quelconque des revendications précédentes, dans lequel la composante visuelle comprend au moins un élément parmi : une semelle intermédiaire, une semelle extérieure, une empeigne, une bande d'enrobage, un protège-lacets, un contrefort de talon, un angle de talon, une ligne de morsure, une surface de contact au sol, un relèvement d'orteil, et un contrefort d'orteil.

**10.** Procédé selon l'une quelconque des revendications précédentes, dans lequel le moteur de classification entraîné génère une boîte englobante pour la composante visuelle, la boîte englobante comprenant au moins un ensemble de premiers pixels indiqués comme étant associés à la composante visuelle et au moins un ensemble de deuxièmes pixels indiqués comme n'étant pas associés à la composante visuelle.

**11.** Procédé selon l'une quelconque des revendications précédentes, dans lequel le moteur de classification entraîné comprend un premier sous-moteur pour identifier une première partie de la composante visuelle et un deuxième sous-moteur pour identifier une deuxième partie de la composante visuelle, où la deuxième partie de la composante visuelle est une sous-composante de la première partie de la composante visuelle, et où le deuxième sous-moteur fonctionne sur la première partie de la composante visuelle identifiée par le premier sous-moteur.

**12.** Procédé selon l'une quelconque des revendications précédentes, dans lequel la sortie représentant l'actif numérique CAO 3D est fournie à un moteur en aval, le moteur en aval comprenant un ou plusieurs des éléments suivants : un moteur d'impression 3D, un moteur de rendu visuel et un moteur de réalité augmentée/virtuelle.

**13.** Procédé selon l'une quelconque des revendications précédentes, comprenant en outre les étapes suivantes : contrôler, sur la base de l'actif numérique CAO 3D et à l'aide d'une ou plusieurs calculateurs, la fabrication des chaussures représentées par l'actif numérique CAO 3D dans une ou plusieurs machines de fabrication.

**14.** Support non transitoire lisible par machine stockant des instructions qui, lorsqu'elles sont exécutées par un ou plusieurs calculateurs, amènent les un ou plusieurs calculateurs à exécuter le procédé selon l'une quelconque des revendications précédentes.

**15.** Système comprenant :

des circuits de traitement ; et
une mémoire stockant des instructions qui, lorsqu'elles sont exécutées par les circuits de traitement, amènent les circuits de traitement à exécuter le procédé selon l'une quelconque des revendications 1 à 13.

FIG. 1

FIG. 2

FIG. 3

EP 4 226 269 B1

# TRAINING PROCESS

FIG. 4

500

508

502
PROCESSOR
524 — INSTRUCTIONS

510
VIDEO DISPLAY

504
MAIN MEMORY
524 — INSTRUCTIONS

512
ALPHA-NUMERIC
INPUT DEVICE

506
STATIC MEMORY

514
UI NAVIGATION
DEVICE

520
NETWORK
INTERFACE DEVICE

526
DRIVE UNIT

MACHINE-READABLE
MEDIUM — 522

INSTRUCTIONS — 524

526
NETWORK

518
SIGNAL
GENERATION DEVICE

521
OUTPUT
CONTROLLER

528
OUTPUT
CONTROLLER

BUS

FIG. 5

FIG. 6

FIG. 7

FIG. 8

FIG. 9

EP 4 226 269 B1

FIG. 10

FIG. 11

PARTS IDENTIFICATION RESULTS — 1202

HEAL COUNTER    BITELINE    TOE COUNTER

HEAL RAKE    GROUND CONTACT    TOE SPRING

1206

SERVERS RUNNING THE
REINFORCEMENT LEARNING ALGORITHM

1204

3D CAD SYSTEM

FIG. 12

1300

1302

1304

1306

1308

FIG. 13

1400

1410

ACCESS INPUT IMAGE OF FOOTWEAR

1420

GENERATE 3D CAD DIGITAL ASSET

1422

IDENTIFY VISUAL COMPONENT

1424

ITERATIVELY FIT SPLINE TO VISUAL COMPONENT

1430

OUTPUT 3D CAD DIGITAL ASSET

FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63089435